# NEW EUROPEAN PATENT SPECIFICATION

(11) **EP 3 695 585 B2**
(45) Date of publication and mention of the opposition decision: **02.08.2023**
(45) Mention of the grant of the patent: 04.11.2020
(21) Application number: 19783425.2
(22) Date of filing: 02.10.2019
(51) Int. Cl.: H04L 29/08, F24F 11/30, G01D 4/00

(54) **MONITORING OF HEAT CONSUMPTION**
ÜBERWACHUNG DES WÄRMEVERBRAUCHS
SURVEILLANCE D'UNE CONSOMMATION THERMIQUE

(30) Priority: 02.10.2018 DK PA201870650; 03.10.2018 DK PA201870654
(43) Date of publication of application: 19.08.2020
(60) Divisional application: 20205383.1
(73) Proprietor: ista International GmbH, 45131 Essen (DE)
(72) Inventor: JUSTESEN, Peter Lindbjerg, 7430 Ikast (DK); MATHIESEN, Benny Martin, 5500 Middelfart (DK)
(74) Representative: Patentgruppen A/S
(86) International application number: PCT/DK2019/050293
(87) International publication number: WO 2020/069710

(56) References cited:
- EP-A1- 3 086 102
- US-A1- 2011 106 316

## Description

### Field of the invention

The present invention relates to monitoring of heat consumption in a plurality of submetered heat consumption arrangements, such as apartments.

### Background

Utilities such as space heating is essential to most residential, commercial, and industrial buildings. Heating may for example be distributed to a large number of buildings, such as apartment housings, by a district heating system, in which heat is generated in a centralized location and distributed to the buildings via a heating medium - typically heated water - through a piping network. Alternatively, the heating medium may be provided by the buildings themselves such as for example in an apartment housing where the heating is generated by an oil burner contained within the apartment housing. Irrespective of where the heating is generated, the heating medium may be transported through a series of pipes within the apartment housing and thereby supply the individual apartments with a heating medium usable for heating the apartments. Space heating of apartments may be done using a radiator through which the heating medium may run through.

With the increasing general recognition of several environmental and climate impacts and challenges related to heating, e.g. related to use of fossil fuels, and with increasing general wish of cost-optimizing also in private households, it is desirable to provide individual households, shops, companies, departments, etc., with their individual values of heat consumption. Such knowledge about a heating system can be used for increased and individual self-control, remote control, automatic control, etc. of the heating in the individual households. Further, such knowledge about a heating system can be used to detect irregularities, defects, fraud, etc. However, in order to effectively achieve these effects, the values for individual heat consumption has to be updated frequently, preferably each day or even more often, to effectively reflect a current state of the heating system.

Typically, the total energy consumption associated with heating such an apartment housing is monitored by the provider of the heating medium or the supplier of the fuel for heating the heating medium, such as a distributed heating supplier or a fuel oil supplier.

However, for housing estates such as apartment complexes consisting of a large group of households with a common heat supply, a total energy consumption for the entire complex received from a heat or fuel supplier is of no use for monitoring the individual heat consumption in the individual apartments or leases of the complex. One cannot assume that the total heat consumption of the building is distributed evenly between individual households, since individual households may have very different heat consumptions due to different sizes of the individual apartments of the housing estate and different heat consumption requirements of the individual tenants. The same challenges exist for commercial or industrial buildings with several individual leases or sections where individual heat consumption monitoring is desired.

To determine how the building's total energy consumption is distributed in individual heat consumption values among the individual apartments, a heat submetering system may be employed. The idea behind a heat submetering system is that a representation of heat consumption is monitored in all the individual households in such a way that each household's share of the total energy consumption of the housing estate can be calculated. However, in a submetering system, the individual household's representation of heat consumption does typically not provide an absolute heat consumption value by itself. For that, it has to be related the other households' representations of heat consumption and to the total heat consumption of the housing estate.

Prior art document US2011106316 proposes determining the energy consumption level or load of an energy consuming appliance are provided, by receiving energy consumption information from a utility meter for the premises prior to activation of the compressor and subsequent to activation of the compressor and estimating the energy consumption based upon the difference between the energy consumption prior to activation and subsequent to activation of certain appliances. Another prior art document EP3086102 discloses a method of operating a heating system including heating arrangements in several units of a building for detecting a representation of energy consumed in the building from the delivered fluid energy medium with a main meter

Fairly often, some of the devices providing the representation of heat consumption in the individual households are temporarily or permanently unavailable for reading and, as explained above, in a submetering system an unavailable reading affects the heat consumption calculation of all the households served by the common energy supply. With rare calculation of heat consumption there is normally time to wait for all the heat consumption values to be obtained. However, due to the above-mentioned desire for frequent updates of individual heat consumption, the common lack of a few heat consumption representations impedes the monitoring and frequent updates of individual heat consumption not only for the household with an unavailable device, but for all the neighbours, too.

### Summary of the invention

The inventors have identified the above-mentioned problems and challenges related to frequent monitoring and updating of individual heat consumption in submetered heat consumption arrangements and obtaining a state of a submetered system as fast as possible, and subsequently made the below-described invention which provides several improvements and solutions in that regard.

An aspect of the invention relates to a method of monitoring heat consumption using a plurality of heat submetering devices distributed in a plurality of individual heat consumption arrangements supplied with a heating medium by a common heat supply, said plurality of heat submetering devices being communicatively associated with a meter reading system, the method comprising:
receiving in said meter reading system measured meter readings, each corresponding to a respective heat submetering device of a received devices group of said plurality of heat submetering devices;
transmitting meter readings to a heat monitoring system, at least one of said meter readings comprising a representation of one of said received measured meter readings, said transmitting comprising:
   allocating said meter readings to transmission batches and for each of said transmission batches:
   transmitting said transmission batch to said heat monitoring system;
   placing said transmitted transmission batch in a batch queue of said heat monitoring system;
   receiving in said meter reading system from said heat monitoring system a batch receipt for said transmitted transmission batch;
validating in said heat monitoring system said transmission batches of said batch queue;
calculating in said heat monitoring system heat consumption values corresponding to one or more of said plurality of heat consumption arrangements for monitoring periods, for each monitoring period the calculating comprising:
   providing an energy consumption derived from said common heat supply and being associated with said monitoring period;
   selecting meter readings corresponding to each of said plurality of heat submetering devices, and being associated with said monitoring period;
   wherein said selected meter readings comprise estimated meter readings corresponding to heat submetering devices of a non-received devices group of said plurality of heat submetering devices and said at least one of said meter readings comprising said representation of one of said measured meter readings.

Thereby is provided an advantageous new way of providing meter readings for calculation of usable consumption values suitable for controlling and regulating heat consumption, as well as detecting irregularities, defects or fraud.

The present invention facilitates greater control and prioritization of the processing of incoming meter readings, updates, estimates, alarms, warnings and other data, as the heat monitoring system places incoming data in a batch queue before performing any processing of them, and in various embodiments decides later or based on priority labels of the data, which order to process the incoming data in.

Further, the heat monitoring system may process incoming data or perform calculations of already processed data in the order and with the prioritization desired at the moment or predetermined. Hence, if a re-calculation of consumption of a certain monitoring period is of higher priority than processing incoming meter readings, the heat monitoring system may with the present invention simply leave the incoming data in the batch queue and perform the calculating. Alternatively, if the evaluation of an incoming alarm, e.g. fire detection or leakage, and appropriate processing thereof, for example alarming a user, is of higher priority than processing other incoming data, the heat monitoring system may process a transmission batch marked as an alarm prior to processing for example meter readings that arrived before the alarm.

Another possible advantage of the improved efficiency of communication by the present invention is that the heat monitoring system may perform calculations of heat consumption independently from the transmission processing, i.e. validation and responding. The calculation processing is not stalled for the time it takes to unpack data and validate them, if a transmission batch is received while the heat monitoring system is performing a calculation.

From the perspective of the meter reading system, the present invention makes the transmission of meter readings more efficient. This is particularly useful when the meter reading system is acquiring meter readings from thousands of heat submetering devices from buildings which have their heat consumption monitored by different heat monitoring systems. Hence, if the meter reading system is distributing the received meter readings to several heat monitoring systems, the present invention may be particularly advantageous. The present invention also facilitates the meter reading system to mark certain transmission batches as more important than others, thereby facilitating a fast response to alarms.

A heat consumption arrangement is understood as for example a housing unit, a real estate unit or an industrial unit with a belonging heat consumption. As an example, a building, e.g. an apartment housing, may comprise a plurality of individual heat consumption arrangements such as apartments, with all the heat consumption arrangements having individual heat consumptions. For an apartment housing, the individual apartments may have different heat consumptions, such that the total heat consumed by the apartment housing is not evenly distributed between the individual apartments. The heat consumption arrangements are a suitable way of dividing a total heat consumption of a building or complex of buildings into smaller units related to the purpose of the heat consumption monitoring. For instance, in the example of an apartment housing, each apartment has a tenant who need monitoring of their individual apartment's heat consumption in order to be able to act in case of irregularities, defects or excessive consumption in their individual apartment, and in the example of an industrial complex, the manager of each department, e.g. development, sales, manufacturing and warehouse, may need monitoring of their individual department's heat consumption for the same reasons.

The heat consumption arrangements, e.g. apartments, which are supplied from a common heat supply, e.g. the apartments of one building are typically supplied from a common central heater in the building or from a single district heating supply, have their total energy consumption measured by a main meter, operated by the utility company or building manager, or the like.

For individual heating, a heat consumption arrangement may comprise one or more heat consumption devices such as heat exchangers like radiators and convector radiators, supplied from the common heat supply. The heat consumption associated with the heat consumption devices may be monitored by a heat submetering device capable of measuring a representation of heat consumption of the heat consumption device. A heat submetering device is understood as a device configured to establish an absolute or relative measure of heat consumption. In this sense, a relative measure of heat consumption is a measure which on its own cannot be used to infer an absolute measure of heat, i.e. the relative measure can only be used to infer an absolute measure of heat in the context of other relative measurements of the other plurality of heat submetering devices associated with the common heat supply. A relative measure of heat consumption may be a number indicating a number of units of heat consumed such as for example 37 units of heat. This relative measure may be interpreted by comparing with other relative measures, established by all other of the plurality of heat submetering devices, in the light of the total energy consumption of all the heat consumption arrangements of the common heat supply.

The heat submetering devices associated with the one or more heat consumption arrangements may be communicatively associated with a meter reading system. By a meter reading system is understood a system arranged to receive measurements related to heat consumptions, such as measured meter readings established by heat submetering devices. The meter reading system may be decentralized with respect to the associated heat submetering devices, such that the system may communicate with multiple heat submetering devices of multiple heat consumption arrangements distributed in for example multiple different apartment housings, with different common heat supplies. The transmission of measured meter readings from the plurality of heat submetering devices to the meter reading system may be performed automatically. Having a meter reading system is advantageous in that measured meter readings from a plurality of heat submetering devices may be established automatically and the measured meter readings may be handled automatically such that manual handling of readings can be avoided to a large extent.

By a meter reading is understood an establishment of a representation related to the heat consumption of a heat consumption device at a given time or period. By establishment is meant that the meter reading may originate from a measured meter reading recorded by a heat submetering device, or the meter reading may originate from an estimated meter reading substituting a, possibly missing, measured meter reading. A meter reading may be a representation of an absolute or relative measurement of heat consumption measured by a heat submetering device, or an estimate thereof, and by a representation of a meter reading is understood that a meter reading may represent a processed measured meter reading or estimated meter reading.

An example of a processed measured meter reading or processed estimated meter reading is a measured meter reading or estimate which is corrected by one or more factors. Such factors may for example comprise a radiator capacity factor indicative of the ability of the associated heat consumption device, e.g. a radiator, of converting the input heat into radiant heat. The processing of measured meter readings may in various embodiments be conducted in the heat submetering devices, the meter reading system or the heat monitoring system.

A representation of a measured meter reading may also be the measured meter reading itself.

By a received devices group is understood a group of heat submetering devices from which measured meter readings are received in the meter reading system. For various reasons, measured meter readings for certain heat submetering devices may not be received in the meter reading system. For example, a heat submetering device may simply be out of order due to damage or a dead battery, whereby no measured meter readings are received from such a heat submetering device. The transmission of measured meter readings may for example be susceptible to transmission outages. As an example, a radio transmission using radio frequency signals may be obstructed by the presence of a metal or concrete object, such as a safe or cabinet located in front of the heat submetering device. Transmission outages may also arise due to interference with other radio signals, interference with electrical devices such as computers, fans, lighting fixtures or fans, and furthermore weather conditions may also have an impact on wireless signal integrity. For example, a lightning strike can cause electrical interference and fog may weaken signals as they pass through. Even wired connections between heat submetering devices and a meter reading system may be susceptible to transmission errors, due to interference with other electrical equipment, or due to broken or bad electrical connection. A meter reading that is not received in the meter reading system may also be due to the meter reading not being attempted transmitted by the heat submetering device, or the meter reading being lost along the way, for example when the meter reading is transmitted through intermediate network nodes such as other heat submetering devices used as relays, a concentrator, network switches and routers, access points, etc.

As seen, some of the reasons for a missing meter reading are clearly temporary and fixed by time going, by coincidence or by simple adjustments, possibly autonomously fixed by the devices or the system. Other reasons are permanent without replacement or repair of devices or infrastructure. Experiencing such transmission errors for a percentage of the heat submetering devices is quite normal, and therefore a distinction is made between heat submetering devices from which meter readings have been received, referred to as a heat submetering devices of a received devices group, and heat submetering devices from which meter readings have not been received, referred to as heat submetering devices of a non-received devices group.

By a transmission batch is understood a data package suitable for transmission between the meter reading system and the heat monitoring system. Depending on the transmission technology, these batches may take the form of different packages. Using for example a web service technology, the batches may take on the form of, for example, JSON-formatted requests.

By allocating meter readings to transmission batches is understood that the meter readings are placed in transmission batches. A transmission batch may comprise one or more meter readings or other types of data.

By placing the transmitted transmission batches in a batch queue is understood that the transmission batches are received in a batch queue associated with the heat monitoring system as a temporary memory.

By a batch receipt is understood a very simple message notifying that a transmission batch is received in the heat monitoring system but does not necessarily include any information about the status, usability or completeness of the received transmission batch. The processing required for this is preferably postponed to the validating of the transmission batches.

In an embodiment, the meter reading system awaits receiving a batch receipt notifying the arrival of a previously transmitted transmission batch in the heat monitoring system before transmitting another transmission batch.

By validating the transmission batches in the heat monitoring system is understood that the heat monitoring system may perform unpacking the transmission batches and checking whether the content of the transmission batches meets a certain data standard of the heat monitoring system.

By a heat consumption value is understood an absolute value of heat consumption corresponding to a heat consumption arrangement and/or absolute values of heat consumption corresponding to one or more heat consumption devices of a heat consumption arrangement. Calculating heat consumption values is advantageous in that it may provide means for tenants of a heat consumption arrangement to be informed about their own energy consumption and depending on the heat consumption values they may consider if their consumption of heat can be reduced. Providing heat consumption values is further advantageous by making it possible to detect irregularities, defects or fraud for the individual subdivisions, e.g. heat consumption arrangements such as apartments or departments, or even down to individual heat consumption devices, such as radiators.

Here is given an example of a calculation of heat consumption values in a submetering system. For sake of simplicity, assume that a group of heat consumption arrangements comprises for example three heat consumption devices, each heat consumption device being monitored by its associated heat submetering device. Over a period of time, the total heat consumption of the group of heat consumption arrangements is measured by a main meter of the common heat supply to be 1000 kWh. A first measured meter reading associated with a first heat submetering device may report a heat consumption of 37 units of heat, a second measured meter reading associated with a second heat submetering device may report a heat consumption of 30 units of heat, and a third measured meter reading associated with a third heat submetering device may report a heat consumption of 33 units of heat. In this example, as the total sum of units of heat is 100, the first measured meter reading amounts to 37 percent of the total heat consumption, i.e. a heat consumption value of 370 kWh, the second measured meter reading leads to a heat consumption value of 300 kWh, and the third measured meter reading leads to a heat consumption value of 330 kWh. From this example, it is evident that a missing measured meter reading, such as for example the second measured meter reading would corrupt the calculation for all the heat consumption arrangements supplied by the common heat supply, for example resulting in the first measured meter reading amounting to more than 50 percent of the total heat consumption instead, and the calculated heat consumption values would therefore not reflect actual heat consumptions. If a meter reading, corresponding to a heat submetering device and comprising a measured meter reading, is not received in the heat monitoring system, an estimate must be used in place of this measured meter reading in order to ensure that as correct calculation as possible of heat consumption values for the heat consumption arrangements may be performed. In this context, such an estimate is referred to as an estimated meter reading. The estimated meter reading has the role of a substitute of a measured meter reading such that a calculation of heat consumption values can be carried out even in the absence of a measured meter reading. Again, the estimation of a single meter reading affects the calculation of all heat consumption devices, also the ones from which measured meter readings were received.

A calculation of heat consumption values is carried out on the basis of meter readings corresponding to all of the plurality of heat submetering devices associated with the common heat supply, and an individual meter reading corresponding to a heat submetering device may comprise a representation of a measured meter reading or an estimated meter reading depending on whether a measured meter reading for that heat submetering device is received in the heat monitoring or not. From the above, it is seen that estimated meter readings correspond to the non-received devices group.

The calculation of heat consumption values is carried out on the basis of an energy consumption derived from the common heat supply associated with the plurality of heat consumption arrangements. In this context, the term energy consumption may be understood as a total heat consumption associated with the plurality of heat consumption arrangements. Even if the heat submetering devices are measuring absolute heat consumption of the heat consumption devices, e.g. radiators, the energy consumption may, for one or more reasons, not coincide with the sum of these absolute meter readings of the plurality of heat consumption arrangements. As an example, an apartment housing is susceptible to heat losses in the piping between the heat supply and the individual heat consumption arrangements, and the apartment housing may comprise common spacing, such as a cellar room shared by the tenants, which require heating as well. Therefore, the energy consumption derived from the common heat supply may exceed the sum of absolute meter readings of the plurality of heat consumption arrangements. As a result, the calculated heat consumption value of an individual heat consumption arrangement may exceed the absolute meter readings of that heat consumption arrangement. This effect is intrinsic for submetered heating systems and means, that for the monitoring of energy consumption all energy consumption from the common heat supply is distributed between the heat consumption arrangements.

By the term "derived" is understood that the energy consumption may not be directly inferred from the common heat supply. This could for example be the case for an apartment housing where the heat supply is an oil burner, and the total energy consumption is derived from a total amount of oil used for heating the heating medium. In the case of district heating, where the heating medium is heated remotely to the heat consumption arrangements, the energy consumption may be derived from a main meter associated with the common heat supply. Such a main meter may for example be positioned at a heating medium inlet of the apartment housing, and thus any measured meter reading obtained from the main meter is a direct representation of the total energy consumption of the apartment housing.

In an embodiment the energy consumption may be estimated from a history of main meter readings associated with the main meter, for example if a main meter reading is not available for a specific monitoring period. Such an estimation may at least partly be based on an extrapolation or an interpolation of main meter readings.

Following the above discussion, it is conceivable that the calculation of heat consumption values may comprise a calculation based partly on estimates, and therefore the obtained heat consumption values may represent approximations of actual heat consumptions of the heat consumption arrangements.

Monitoring period is the time resolution of the monitoring of heat consumption. By a monitoring period is understood the divisions of time for which heat consumption values are calculated for the heat consumption arrangements. The monitoring period may have a duration of no longer than a month, such as no longer than a week, for example no longer than a day, such as no longer than an hour, for example no longer than a minute, or less. A monitoring period of an hour means that the heat monitoring system calculates heat consumption values for every hour, and an operator, tenant, a machine or another user is thereby able to 'zoom in' and monitor the heat consumption on an hourly basis. Reducing the monitoring period to for example one second, increases the monitoring resolution considerably, and allows one to follow the heat consumption second by second. On the other hand, prolonging the monitoring period to for example three months or more, drastically reduces the usability of the system as the above-mentioned effects of using the generated heat consumption information for control and regulation and as a state of the system for discovery of defects, irregularities or fraud, etc., becomes very difficult without frequent updates.

As an example, the monitoring period may be any number of for example weeks, days, hours or minutes. During this monitoring period one or more of the plurality of heat submetering devices may establish measured meter readings and depending on the specific heat submetering device this establishment may occur with a specific frequency. Crucial to the monitoring period is that a set of measured meter readings corresponding to all heat submetering devices is attempted being established during this period of time. In the case of a malfunctioning heat submetering device, such as a heat submetering device not powered by electricity, the corresponding meter reading can clearly not be established, and therefore the set of measured meter readings obtained during the monitoring period may not represent a complete set of measured meter readings of the plurality of heat submetering devices.

Meter readings and energy consumption being associated with a certain monitoring period is referring to the meter readings and energy consumption that are used to calculate the heat consumption for that monitoring period. In theory, these meter readings may be measured just at the end of the monitoring period to give an ideal calculation of consumption during the monitoring period. In practice, the measuring at the various heat submetering devices is often deliberately, by coincidence or by lack of synchronization means, not synchronized in time with each other and/or not synchronized in time with the measuring periods considered by the heat monitoring system. Hence, for the calculation of consumption for a certain monitoring period the heat monitoring system often have to use meter readings and energy consumption which is not perfectly synchronized with the end of the monitoring period but may consider it an insignificant error or may compensate for the error by various averaging or interpolation techniques. Anyway, the meter readings and energy consumption used for calculation of consumption for a certain monitoring period, synchronized or not, are referred to as associated with that certain monitoring period.

By a heat monitoring system is understood a system which is configured to monitor heat consumption values of the plurality of heat consumption arrangements. Such a monitoring may comprise monitoring a total heat consumption value of the plurality of heat consumption arrangements, monitoring a total heat consumption value of a subset of the plurality of heat consumption arrangements, monitoring a total heat consumption value of an individual heat consumption arrangement comprising one or more heat consumption devices, and monitoring heat consumption of an individual heat consumption device associated with its own heat submetering device. By monitoring is understood that a heat consumption associated with one or more heat submetering devices is kept track of over time. As an example, the heat monitoring system may keep track of the evolution of heat consumption values of individual heat consumption arrangements over time. The monitoring expresses a state of a physical system, usable for detection of irregularities, defects or fraud, or for control and regulation automatically or manually by the individual heat consumption device operators, such as the individual tenants of apartments in an apartment building.

As an example, users of the heat monitoring system may keep track of the evolution of heat consumption values over time through an interface of the heat monitoring system. Such an interface may comprise a visualization of heat consumption values of individual heat consumption arrangements. Examples of visualization may include substantially real-time visualization of heat consumption values, such that the visualization always reflects the most recent heat consumption values based on the meter readings received in the heat monitoring system. The visualization of heat consumption values may for example comprise a visualization of heat consumption values in units of kWh.

The monitoring may in various embodiments comprise comparison of heat consumption values between heat consumption devices or heat consumption arrangements, or comparison of previous and current heat consumption values. Such comparisons may also be visualized to put a state of the heating system into perspective for increased usability in detection of irregularities, defects or fraud, or for control and regulation of heat consumption.

In an embodiment the heat monitoring system may be accessed externally from e.g. a person associated with a heat consumption arrangement, such as a tenant of an apartment. Being able to access the heat monitoring system externally is advantageous in that it allows one or more persons associated with a heat consumption of a heat consumption arrangement to monitor their own heat consumption. Gaining access into one's own energy consumption is advantageous in that patterns of inappropriate heat consumption may be detected and responded to accordingly. By changing heat consumption patterns, a reduction of heat consumption may be achieved, which may result in a less negative climate impact, through a lesser need of generating heat by the heat supplier.

The heat monitoring system is configured to calculate heat consumption values of the one or more heat consumption arrangements on the basis of meter readings. By the term heat consumption values is understood a value referring to a level of heat consumption associated with a heat consumption arrangement and/or heat consumptions associated with one or more individual heat consumption devices of that heat consumption arrangement.

The heat monitoring system may receive meter readings associated with one or more monitoring periods, and therefore, for a calculation of heat consumption values corresponding to a specific monitoring period, the heat monitoring system may select the transmitted meter readings associated with that specific monitoring period in order to carry out a calculation of consumption values for that monitoring period.

In an embodiment said transmission batch comprises a data format storing one or more meter readings.

The meter reading system may in an embodiment allocate each single meter reading to a single transmission batch, thereby facilitating the heat monitoring system to prioritize among the individual meter readings and ensuring as little data as possible is lost if a transmission batch is lost. In another embodiment, the meter reading system may allocate several meter readings to each transmission batch, thereby facilitating more cost-efficient transmissions with respect to overhead per data bit. In the latter embodiment, the meter reading system may advantageously allocate the meter readings to transmission batches according to criteria, thereby applying an ordering of the meter readings facilitating the later processing in the heat monitoring system, including possible prioritization of the meter readings.

In an embodiment said transmitting meter readings comprises the meter reading system transmitting said transmission batches to a service exposed by said heat monitoring system.

Any communication technology may be used between the meter reading system and the heat monitoring system. An advantageous embodiment uses web service technologies or similar to establish the connection, for example and preferably via the public Internet.

In an embodiment, the roles are switched so that the meter reading system exposes a service accessible for the heat monitoring system, and the heat monitoring system is thereby enabled to request transmission of meter readings from the meter reading system. This embodiment may generally be implemented in connection with any of the other embodiments described herein.

In an embodiment said transmission batch comprises a data format for web service communication, such as SOAP, JSON or XML.

The heat monitoring system may for example expose its service as a web service, for example by means of Web Service Description Language WSDL or other web service schemes, for example a Representational State Transfer REST-compliant web service, and the meter reading system may format its requests, i.e. data transmission, by eXtended Markup Language XML, Simple Object Access Protocol SOAP, JavaScript Object Notation JSON, etc. The communication is preferably secured by encryption of the communication link, e.g. by transport layer security TLS, i.e. HTTPS, or suitable alternatives, or by encryption of the data themselves, e.g. encrypted XML or secure SOAP.

In an embodiment said meter reading system and said heat monitoring system are implemented in respective server computers.

One advantage of implementing the meter reading system and the heat monitoring system in respective server computers is that meter readings and updated meter readings may be stored in two independent server computers. This adds a level of data security, since any loss of data on one server computer may be restored by the data stored on the other server computer, as embodiments of the present invention further provides means for keeping the data on the two servers synchronized. Also, with respect to maintenance, security, dependencies, freedom of technologies and upgrades, etc., the distribution of the two systems onto separate server computers is advantageous. Preferably, the separate systems are located at separate locations and have individual operators.

In an embodiment said allocating said meter readings to transmission batches is performed in accordance with monitoring periods so that meter readings associated with the same monitoring period are allocated to the same transmission batch, preferably all meter readings related to said common heat supply and associated with the same monitoring period are allocated to the same transmission batch.

The meter reading system may advantageously allocate and transmit all the meter readings that should be used together in a calculation of heat consumption values in one single transmission batch, so that the heat monitoring system may process all the so related meter readings together by processing one transmission batch, and after that have all the necessary meter readings ready for calculation. This may be more efficient than a differently ordered or unordered allocation, where several transmission batches may have to be processed before all meter readings required for a single calculation are retrieved.

In an embodiment said allocating said meter readings to transmission batches is performed in accordance with monitoring periods so that a transmission batch comprises only meter readings associated with a common monitoring period, preferably all meter readings related to said common heat supply and associated with the common monitoring period and no other meter readings.

The meter reading system may advantageously perform the allocation so that each transmission batch only relates to a single monitoring period. There is facilitated that the heat monitoring system may prioritize the processing of the transmission batches in accordance with its prioritization of calculation of monitoring periods. In other words, the heat monitoring system may thereby choose to process the transmission batch related to the monitoring period that the heat monitoring system should preferably calculate next, instead of processing the transmission batches in the order of receiving, or process all of a number of received transmission batches before being able to perform any calculation.

In an embodiment said transmission batches comprise meter readings associated with a plurality of monitoring periods.

The meter reading system may transmit meter readings associated with a plurality of monitoring periods, i.e. from previous monitoring periods. Transmitting meter readings from previous monitoring periods may be necessary since the heat submetering devices associated with the meter reading system may not provide measured meter readings with the same time resolution as the monitoring periods. As an example, a monitoring period may be one hour but some heat submetering devices only provide the meter reading system with measured meter readings at two-hour intervals. Therefore, the most present meter reading corresponding to a heat submetering device may not be associated with a current monitoring period.

In an embodiment at least one of said allocated meter readings comprises an estimated meter reading corresponding to a heat submetering device of a non-received devices group of said plurality of heat submetering devices.

By using the transmission batches to transmit both measured meter readings and estimated meter readings, the transmission batches can be used to transmit all the meter readings required for a calculation of a heat consumption value, i.e. a meter reading for each heat submetering device, both received and non-received, related to the common heat supply.

In an embodiment at least one of said allocated meter readings comprises an updated meter reading corresponding to one of said plurality of heat submetering devices.

The transmission batches may advantageously also be used to transmit updated meter readings, i.e. meter readings associated with a monitoring period and heat submetering devices for which measured meter readings or estimated meter readings have already been transmitted previously. The updated meter readings may for example comprise a measured meter reading that was not previously available and therefore substitutes an estimated meter reading for the respective monitoring period, or an improved estimated meter reading, herein also referred to updated estimated meter reading, substituting a previous estimated meter reading for the respective monitoring period.

In an embodiment said batch receipt is sent from said heat monitoring system without further processing of said transmitted transmission batch than said placing said transmitted transmission batch in said batch queue.

The batch receipt is advantageously transmitted from said heat monitoring system directly after receiving a transmission batch, without any validation, unpacking or other processing of the transmission batch.

In an embodiment said batch receipt cannot contain error indications.

The batch receipt is only intended for communicating that a transmission batch is received, and possibly including an identifier for later reference to the transmission batch. Any errors or irregularities related to the transmission batch or its payload, e.g. meter readings, have not yet been detected at the time the batch receipt is sent. It is advantageous to keep the batch receipt as simple and small as possible, and get it transmitted as soon after receipt of a transmission batch as possible. Any errors or irregularities detected later during unpacking and validation of the data of the transmission batch, may be communicated by means of for example a validation response, as explained in more detail below.

In an embodiment said batch receipt comprises a unique identifier.

A unique identifier in the batch receipt facilitates later reference to the respective transmission batch by using the unique identifier. For example, a later validation response transmitted when the heat monitoring system has had time to process the transmission batch, may preferably use the unique identifier of the batch receipt to refer to the respective transmission batch which the validation response relates to. The transmission of the unique identifier via the batch receipt also facilitates that the meter reading system may request a status update or a validation response related to the transmission batch identified by the unique identifier.

The unique identifier may be unique in a global perspective, an application perspective, or simply be unique for a certain time of relevance. The unique identifier does not have to be theoretically absolutely unique, as long as the probability for uniqueness is acceptably high at least for a time of relevance of the identifier. The unique identifier may for example be a serial number increasing with each batch receipt and wrapping around at overflow depending on the datatype. The datatype or maximum number of unique identifiers may for example be selected based on the maximum imaginable amount of transmission batches that can be expected to arrive before validation responses for the first ones are shipped, as the transmission of the validation response makes future references to the processed transmission batch less relevant. The unique identifier may also for example be implemented as one of the versions of universally unique identifier UUID or globally unique identifier GUID standards, or similarly, whereof some only provide a very high probability of uniqueness, which is acceptable for most implementations of the present invention.

In an embodiment the only information in said batch receipt is a unique identifier.

The batch receipt in this advantageous embodiment is only intended for communicating an identifier for later reference to the transmission batch. Any errors or irregularities related to the transmission batch or its payload, e.g. meter readings, have not yet been detected at the time the batch receipt is sent. It is advantageous to keep the batch receipt as simple and small as possible, and get it transmitted as soon after receipt of a transmission batch as possible. Any errors or irregularities detected later during unpacking and validation of the data of the transmission batch, may be communicated by means of, for example, a validation response by reference to the unique identifier, as explained in more detail below.

In an embodiment the meter reading system stores information about a transmitted transmission batch in a memory of said meter reading system, and upon receipt of a batch receipt for the respective transmission batch further stores said unique identifier together with said information about said transmitted transmission batch.

It is advantageous that the meter reading system stores the transmitted transmission batches or sufficient information about them to identify the included meter readings or other data in a memory, for later reference, at least as long as validation responses related to the transmission batches have not been received. When receiving a batch receipt for a transmission batch, the meter reading system should store the unique identifier of the transmission batch together with the respective transmission batch, so that the unique identifier may afterwards be used by both the meter reading system and the heat monitoring system to refer to a specific transmission batch. The storing of transmission batch and unique identifier may be performed simultaneously after having received the batch receipt. In an embodiment where the batch receipt only comprises a status code and not a unique identifier, a representation of the status may be stored with the transmission batch. The memory of the meter reading system for storing transmitted transmission batches during a period of relevance may be a database in volatile or non-volatile memory. Whereas the transmission batches should preferably be stored as long as no validation response has been received, the meter reading system may apply a timeout for performing memory cleanup, for example selected as the period after which no validation response can be expected or when the meter readings of the transmission batch may be considered no longer relevant.

In an embodiment said batch receipt is a status code.

The batch receipt in this advantageous embodiment is only intended for communicating that a transmission batch is received. The status code may for example be single or a few bits, for example simply indicating OK or similar, preferably implemented in a header field of a small data packet. The existence of the batch receipt itself may in an embodiment be indicative of a receipt of a transmission batch, and thereby the batch receipt does not have to contain any payload. Any errors or irregularities related to the transmission batch or its payload, e.g. meter readings, have not yet been detected at the time the batch receipt is sent. It is advantageous to keep the batch receipt as simple and small as possible, and get it transmitted as soon after receipt of a transmission batch as possible. Any errors or irregularities detected later during unpacking and validation of the data of the transmission batch, may be communicated by means of, for example, a validation response, as explained in more detail below.

In an embodiment said meter reading system after transmitting said transmission batch awaits the receipt of said batch receipt before proceeding with transmitting a further transmission batch.

The meter reading system may preferably await the batch receipt for a certain transmission batch before proceeding with other transmission. Therefore, it is advantageous to implement the batch receipt as small and simple as possible and transmit it from the heat monitoring system as soon as the receipt of the transmission batch is complete but before the heat monitoring system starts processing the transmission batch.

In an embodiment said validating said transmission batches comprises processing said transmission batches to produce said meter readings allocated in said transmission batches and storing said meter readings in a memory of said heat monitoring system.

Besides the transmission of the very simple batch receipt described above, all processing of the received transmission batches is thereby advantageously postponed until resources are available in the heat monitoring system. When transmission batches are received with sufficient time between them, the validation of a transmission batch may be performed immediately after the receipt if resources are available, and when several transmission batches are received one directly after another, or the heat monitoring system is busy doing other things such as the calculation of heat consumption values, the heat monitoring system simply transmits the very simple batch receipt after receiving each transmission batch, and postpones all further processing until resources are available. In the meantime, the received transmission batches may be placed in a buffer or a queue, or other suitable memory structure, herein referred to as the batch queue.

When the heat monitoring system has time and resources to perform the validating of a transmission batch, it may advantageously unpack the transmission batch to produce the included one or more meter readings and store the produced meter readings in a memory. The unpacking may comprise simply stripping transmission headers and footers from a meter reading, or may comprise further tasks such as reformatting, decrypting, etc. The unpacked meter readings may then be stored in memory, such as a database, of the heat monitoring system.

In an embodiment said validating said transmission batches further comprises validating said meter readings transmitted to said heat monitoring system in said transmission batches.

The heat monitoring system may perform a validation of the transmitted meter readings and updated meter readings. Such a validation may be a formality check ensuring that the transmitted readings are not corrupted and conform with a data standard of the heat monitoring system. The validation may also be a checking of the meter reading compared with previous meter readings of the same heat submetering device, or simultaneous meter readings from other heat consumption arrangements of the common heat supply. If for example, a transmitted meter reading reflects a heat consumption being substantially different from a previous history, a meter reading may not be validated, or an investigation on possible other reasons may be effectuated. This could be the case if a meter reading reflects a significant heat consumption of a heat consumption arrangement with no expected heat consumption, e.g. the heat consumption arrangement is currently not in use and therefore not supposed to be heated, or the other way around, if a meter reading reflects substantially zero consumption in an occupied heat consumption arrangement during a mid-winter monitoring period. If a meter reading does not pass the validation in the heat monitoring system, depending on the reason, the heat monitoring system may for example use the below-described validation response to request a re-transmission from the meter reading system, or it may discard the reading and produce or request an estimated meter reading for substitution. In the latter case, the heat monitoring system preferably transmits the generated substitute estimated meter reading back to the meter reading system, for example via an auxiliary output interface of the heat monitoring system. This is advantageous in order to keep the meter reading system and heat monitoring system synchronized with respect to the meter readings data that are used, which may also be relevant if the meter reading system is performing its data validation based on previous data.

In an embodiment said validating said transmission batches comprises after validating a transmission batch generating and transmitting a validation response from said heat monitoring system to said meter reading system.

The heat monitoring system may advantageously transmit a validation response to the meter reading system when it has had time to process the received transmission batch. The validation response may be more elaborate and require more resources to generate and process than the very simple batch receipt.

In an embodiment said heat monitoring system transmits said validation response to said meter reading system upon a validation request from said meter reading system.

As the validation is advantageously not necessarily performed directly after receiving a transmission batch in the heat monitoring system, the meter reading system may in an embodiment request a status update or a validation response related to a certain transmission batch. This also facilitates that validation responses in an embodiment are only requested and thereby transmitted for certain transmission batches.

In an embodiment said validation request from said meter reading system comprises a reference to the respective batch receipt of said transmission batch that was validated, such as a unique identifier comprised by said batch receipt.

A request from the meter reading system for a validation response from the heat monitoring system may advantageously refer to the relevant transmission batch by means of an identifier received with the batch receipt.

In an embodiment said validation response comprises a reference to the respective batch receipt of said transmission batch that was validated, such as a unique identifier comprised by said batch receipt.

It is advantageous to include a reference to the batch receipt in the validation response, for example a unique identifier transmitted with the batch receipt as described above, thereby facilitating the meter reading system to link the new validation response with a previously transmitted transmission batch.

In an embodiment said meter reading system includes a unique reference in said transmission batch before transmitting and said heat monitoring system includes said unique reference in said validation response for the respective transmission batch.

The unique reference may be unique in a global perspective, an application perspective, or simply be unique for a certain time of relevance. The unique reference does not have to be theoretically absolutely unique, as long as the probability for uniqueness is acceptably high at least for a time of relevance of the reference. The unique reference may for example be a serial number increasing with each transmission batch and wrapping around at overflow depending on the datatype. The datatype or maximum number of unique references may for example be selected based on the maximum imaginable amount of transmission batches that can be expected to arrive before validation responses for the first ones are shipped, as the transmission of the validation response makes future references to the processed transmission batch less relevant. The unique reference may for example be a transmission batch identifier or an address to which the validation response for that specific transmission batch should be directed. The unique reference may for example be a uniform resource name URN, a uniform resource identifier URI, a uniform resource locator URL, a universally unique identifier UUID as described above, a serial number as described above, a pointer or handle to a function, etc.

It is advantageous to include such a unique reference in the transmission batches the facilitate referencing the respective transmission batches when the heat monitoring system transmits validation response, thereby again facilitating the meter reading system to link the new validation response with a previously transmitted transmission batch.

Preferred embodiments related to validation responses can be obtained by either implementing the features of including unique identifiers in the batch receipts and using these in the validation response for referring to the respective transmission batch possibly upon request for a validation response from the meter reading system using the unique identifier, or implementing the features of including unique references in the transmission batches and using these in the validation response for referred to the respective transmission batch.

In an embodiment said validation response comprises an indication of errors in said validated transmission batch and/or said meter readings of said transmission batch.

The heat monitoring system may use the validation response to inform the meter reading system about errors in the respective transmission batch and/or the meter readings that were transmitted by the transmission batch. As the validation of data and generation of an error report consumes resources, it would not always be possible for the heat monitoring system to do this on the fly at the instance a new transmission batch is received. Therefore, it is advantageous to postpone this processing by simply sending a very simple batch receipt that consumes a minimum of resources, and then later when resources are available, perform the validation, generation of error report and transmission of validation response.

In an embodiment said validation response comprises an indication of meter readings that the meter reading system should retransmit.

The validation response is further an advantageous option for the heat monitoring system to request retransmission of meter readings, for example in case of detected errors or irregularities. A retransmission of a meter reading may in the present context be a retransmission of the exact same data or it may involve transmitting a different version of the meter reading for the same heat submetering device for the same monitoring period, but with a corrected reading value or as an estimate instead of a measurement.

In an embodiment said generating and transmitting a validation response related to a specific transmission batch is conditioned on said validating said specific transmission batch resulting in errors.

The heat monitoring system may advantageous by arranged to only transmit the validation responses for transmission batches where the validation resulted in errors. In this embodiment, the meter reading system may maintain batch receipts and information about related transmission batches for a predetermined time, and after this predetermined time presume the validation to have taken place with successful result leading to no validation response being received.

In an embodiment each meter reading comprises a reading time, and said association of meter readings with said monitoring period is based on said reading time.

By a reading time is understood a time for which the meter reading relates to the heat consumption, such as for example a timestamp for a measurement. Hence, for a measured meter reading, the reading time may express the time the measurement was performed, and the measured meter reading established by its corresponding heat submetering device. In the case of an estimated meter reading, the reading time defines the time at which the corresponding heat submetering device is supposed to have had the value of the estimated meter reading substituting a missing measured meter reading from that device.

By association of meter reading with monitoring period is understood that the meter reading is used for calculations of heat consumption values corresponding to the monitoring period. The reading time may be associated with the monitoring period by being substantially at the end of the monitoring period, or within a predefined acceptable range before and/or after the end of the monitoring period, or simply be associated with the nearest end of a monitoring period. If more measured meter readings are generated for each monitoring period, the one closest to the end of the monitoring period is preferably associated with the monitoring period, or the several measured meter readings are used for interpolation of meter reading to generate an estimated meter reading with a reading time at the end of the monitoring period.

In an embodiment said selecting meter readings comprises selecting among meter readings produced by said validating said transmission batches and stored in said memory of said heat monitoring system.

By time the heat monitoring system receives transmission batches with meter readings pertaining to different monitoring periods, different heat submetering devices, some measured meter readings, some estimated meter readings, etc. When performing a calculation of heat consumption in a specific monitoring period, the heat monitoring system selects that relevant meter readings among the received meter readings. The heat monitoring system needs a meter reading for each heat submetering device of the common heat supply, for the specific monitoring period.

In an embodiment said selecting meter readings comprises providing an estimated meter reading for any of said plurality of heat submetering devices for which no meter reading associated with said monitoring period is found in said memory of said heat monitoring system.

As the heat monitoring system needs a meter reading for each heat submetering device of the common heat supply, for the specific monitoring period, in order to calculate heat consumption values, the heat monitoring system may preferably provide estimated meter readings where no meter reading already exists in the database. The providing of the estimated meter reading may comprise the heat monitoring system establishing an estimated meter reading, or it may involve requesting an estimated meter reading from the meter reading system or a third-party estimation provider.

In an embodiment said meter reading system further receives other readings such as utility consumption related readings or environment related readings and further also allocates said other readings to said transmission batches alone or in combination with said meter readings.

The meter reading system preferably having a well-functioning data acquisition system in the relevant buildings and the above-described advantageous way of communicating with the heat monitoring system, may advantageously also utilize these resources for acquiring other readings, for example other utility consumption related readings for example related to water consumption, electricity consumption, etc., or other environment related readings for example related to humidity or carbon dioxide in the heat consumption arrangements such as apartments, or fire or smoke detectors, etc. Such other readings may be used by the heat monitoring system for providing more detailed heat consumption monitoring or supplementing the heat consumption monitoring with other consumption monitoring, or further monitoring security with respect to for example fire detection of the apartments.

In an embodiment said meter reading system may further allocate alarms to said transmission batches alone or in combination with meter readings.

By an alarm is understood a report of an irregularity observed by the meter reading system. An alarm transmitted to the heat monitoring system by a transmission batch may for example comprise a fire or smoke detector alarm, or flood or leakage alarm, received by the meter reading system from an apartment. Other irregularities may for example comprise unexpected heat consumptions as measured by a heat submetering device, for example an unexpected high or low heat consumption, which may either pertain to a faulty heat submetering device or sudden changes in heat consumption or indicate fraud. Such an alarm may for example be used to report excessive heat consumptions from e.g. a radiator that is unintentionally left in a fully open position. Another irregularity may be a heat submetering device from which measured meter readings have not been received from over the course of a time period, e.g. a predetermined time period. Such an irregularity may be an indication of a malfunctioning heat submetering device, for example a heat submetering device not being powered by electricity. A transmission batch comprising an alarm may be given a high priority such that it may be processes by the heat monitoring system as quickly as possible. As used herein, alarms may also comprise warnings, error reports, notices, etc., and may have different prioritization.

In an embodiment said transmission batches comprise a priority label associated with a priority level.

By a priority label is understood a label associated with a transmission batch indicating a priority of processing the transmission batch in the heat monitoring system. The priority label may for example be a simple header field in the transmission batch, and is preferably detectable by the heat monitoring system immediately upon receipt of the transmission batch without requiring further processing such as unpacking, formatting, validation, etc. Thereby the priority label may be detected and considered before the transmission batch is placed in the batch queue.

The priority label may show a priority level, e.g. a high priority level or a low priority level, such that transmission batches with a high priority level are processed before transmission batches with a low priority level. The priority level may also be represented as a simple number, with increasing numbers indicating increasing levels of importance. The priority label is included in the transmission batch by the meter reading system, and in an embodiment where the priority label dictates the priority level, the meter reading system thereby decides the priority level. This decision may be according to a predetermined agreement with the heat monitoring system or the operators thereof, whereby the heat monitoring system is in fact assigning the priority levels.

In an alternative embodiment, the priority label comprises an indication of data type, for example whether it being alarms, warnings, meter readings, updated meter readings, other consumption or environment related readings, etc. Thereby the heat monitoring system facilitated to associate the priority level to the priority label upon receipt or even later, for example upon processing, thereby allowing the heat monitoring system to prioritize between processing of alarms, recent meter readings, updated meter readings pertaining to previous calculations, other data, etc.

In an embodiment said placing of said transmission batches in said batch queue is performed on the basis of said priority level.

The placing of the transmission batches in the batch queue may comprise sorting the transmission batches according to their respective priority levels such that for example transmission batches associated with a high priority level is placed in front of transmission batches associated with a lower priority level. Placing transmission batches in the batch queue on the basis of priority levels is advantageous in that important transmission batches, such as transmission batches comprising alarms, can bypass other previously transmitted transmission batches and be processed in the heat monitoring system as quickly as possible.

In an embodiment the transmission batches having the highest priority level are put in front of the batch queue such that these transmission batches are processed by the heat monitoring system first.

In an embodiment said batch queue comprises a first batch queue and a second batch queue, wherein said first and second batch queues are arranged to receive transmission batches wherein said first batch queue is arranged to handle transmission batches with a different priority label than the transmission batches received in said second batch queue.

Separating the batch queue into a first and a second batch queue is advantageous in that transmission batches with for example a high priority level may be placed in a batch queue arranged to handle transmission batches of a high priority, and transmission batches with a lower priority level may be placed in a separate batch queue. The heat monitoring system may choose to handle all the transmission batches pertaining to a high-priority batch queue before handling transmission batches pertaining to a low-priority queue. In an embodiment where the priority label indicates a data type, e.g. alarm, meter reading or updated meter reading, the placing in the different batch queues may be performed based on the datatypes, and the heat monitoring system may then decide to process for example alarms before meter readings before updated meter readings, etc. The batch queue may not be restricted to having a first and a second batch queue but may in fact comprise any number of batch queues, each batch queue arranged to handle transmission batches with specific values or ranges of priority levels.

In an embodiment said calculating heat consumption values for a monitoring period is repeated as a re-calculation for the same monitoring period, the re-calculation being triggered by meter readings associated with said same monitoring period being received via said transmission batches in the heat monitoring system.

Calculations of heat consumption values for a given monitoring period may advantageously be performed repeatedly when new meter readings, for example updated measured meter readings and updated estimated meter readings, associated with that given monitoring period are received in the heat monitoring system after the first calculation of heat consumption values for that given monitoring period. The heat monitoring system requires a full set of meter readings i.e. meter readings corresponding to all submetering devices of the heat consumption arrangements supplied with a heating medium from the common heat supply, in order to calculate heat consumption values for a monitoring period. If for example the heat monitoring system only has a subset of these meter readings, it may use estimated meter readings, corresponding to the non-received devices group of heat submetering devices not received for that monitoring period, in order to carry out the calculation. As more measured meter readings associated with that monitoring period are received in the heat monitoring system, the heat monitoring system may replace previously used estimates and re-calculate the heat consumption values. In this sense, the heat monitoring system may always provide at least an approximation of heat consumption values for a monitoring period, and, with time, the approximation may converge towards the actual heat consumptions since the calculation of heat consumption values becomes less dependent on estimated meter readings as measured meter readings are received in the heat monitoring system. Thus, performing more than one calculation of heat consumption values for a monitoring period is advantageous in that heat consumption values may be provided by the heat monitoring system at any time after at least one measured meter reading has been received for a given monitoring period. This is useful for providing an approximation of heat consumption values for a given monitoring period as soon as possible, where a reduced delay in obtaining heat consumption values is more important than the initial accuracy of the heat consumption values, and where one can rely on estimated meter readings being used to some extent. Further, this embodiment facilitates a continuous improvement of calculated heat consumption values as long as updated meter readings arrives.

In an embodiment said meter reading system further receives measured meter readings corresponding to heat submetering devices of additional pluralities of heat submetering devices distributed in additional pluralities of heat consumption arrangements supplied with heating media by additional common heat supplies.

The meter reading system may be tasked with the acquisition of meter readings from several buildings each having their own heat supply common to the heat consumption arrangements such as apartments or business departments of each building. In other words, several common heat supplies may exist, each supplying a plurality of heat consumption arrangements, and for each common heat supply there is a plurality of heat submetering devices distributed in the heat consumption arrangements of the respective common heat supplies.

In an embodiment said allocating said meter readings to transmission batches is performed in accordance with common heat supply so that meter readings corresponding to heat submetering devices of heat consumption arrangements supplied with said heating medium from the same common heat supply are allocated to the same transmission batch.

A meter reading system receiving meter readings related to heat submetering devices of several common heat supplies, may advantageously sort the meter readings into different transmission batches, so that no transmission batch contains meter readings related to different common heat supplies, i.e. typically corresponding to different buildings. By such allocation based on common heat supply, the heat monitoring system may be able to prioritize and simplify its validation and calculation steps. Further such allocation facilitates transmitting meter readings from different buildings to different heat monitoring systems.

In an embodiment further transmission of further meter readings to additional heat monitoring systems by means of said allocating meter readings to a transmission batch, said transmitting said transmission batch to said additional heat monitoring systems, said placing said transmitted transmission batch in a batch queue of said additional heat monitoring system and said receiving from said additional heat monitoring system said batch receipt.

The meter reading system may be tasked with meter reading acquisition for several heat monitoring systems, so that some meter readings should be transmitted to one heat monitoring system, other meter readings to another meter reading system, etc. All readings related to a common heat supply, typically a building, should be transmitted to the same heat monitoring system in order to enable the calculation of heat consumption values, as all readings related to apartments with common heat supply are needed in a submetered system.

In an embodiment said allocating said meter readings to transmission batches is performed in accordance with an associated heat monitoring system so that meter readings corresponding to heat submetering devices of heat consumption arrangements associated with different heat monitoring systems are allocated to different transmission batches.

A meter reading system receiving meter readings related apartments associated with different heat monitoring systems, may advantageously sort the meter readings into different transmission batches, so that no transmission batch contains meter readings related to different heat monitoring system, and then transmit the transmission batches to the different respective heat monitoring systems. In this embodiment, where the meter reading system may be transmitting transmission batches to several different heat monitoring systems, the method of the heat monitoring systems quickly placing the transmission batches in a batch queue and sending a simply batch receipt before starting their individual processing, highly increases the efficiency at the meter reading system.

In an embodiment the time of said receiving measured meter readings associated with a monitoring period is a first acquisition time of said monitoring period and the time of said transmitting a transmission batch comprising meter readings associated with said monitoring period is a first transmission time of said monitoring period.

In an embodiment the method comprises a step of providing in said meter reading system at a second acquisition time of said monitoring period after said first transmission one or more meter readings associated with said monitoring period and corresponding to one or more heat submetering devices of said non-received devices group.

In an embodiment the method comprises a step of transmitting one or more updated meter readings to said heat monitoring system at a second transmission time of said monitoring period later than said first transmission time, wherein each updated meter reading comprises one of said one or more meter readings provided in said meter reading system at said second acquisition time of said monitoring period.

In an embodiment the method comprises repeating said calculating as a recalculating in said heat monitoring system of heat consumption values corresponding to one or more of said plurality of heat consumption arrangements for a monitoring period for which said calculating has already been performed, the recalculating comprising:
providing said energy consumption derived from said common heat supply and being associated with said monitoring period;
selecting meter readings corresponding to each of said plurality of heat submetering devices, and being associated with said monitoring period;
wherein said selected meter readings comprise meter readings transmitted at said first transmission time of said monitoring period and said updated meter readings transmitted at said second transmission time of said monitoring period.

Thereby is provided an advantageous new way of managing meter readings and estimates under contemporary requirements for quick and frequent production of usable consumption values suitable for controlling and regulating heat consumption, as well as detecting irregularities, defects or fraud.

By this embodiment, the time to making available the first calculations of consumption for a certain monitoring period can be significantly reduced, because arrangements are made to ensure that meter readings, measured or estimated, exist for all heat submetering devices early in the process at the first transmission time. However, when more measured meter readings for the same monitoring period turns up later, and/or improved estimates are available later, the present embodiment allows for re-calculation of the consumption to incorporate the later, but better, knowledge about the system state. An appropriate selection of the delay between the end of a monitoring period and the first transmission time related to that monitoring period, may consider a balancing between the desire to get consumption calculation results early, the expectations to the accuracy of the first calculations, as well as the amount of further transmissions and re-calculations that are acceptable.

Further, embodiments improve the communication between a meter reading system and a heat monitoring system by setting up means for controlling the extent in volume and timeframe for sharing such better knowledge.

A measured meter reading that is not received in the meter reading system at the first acquisition time may be received at a later second acquisition time, e.g. in case of temporary communication problems between the heat submetering device and the meter reading system as described above. If for example a measured meter reading is corrupted after being dispatched from a heat submetering device, that measured meter reading may not necessarily be lost, since a later dispatch of measured meter readings may include a previous history of several measured meter readings, one of which being the very measured meter reading previously corrupted in the communication. In another example, the heat submetering device may queue readings until a reliable communication is established, and then transmit some or all readings made since the last successful communication.

By an updated meter reading is understood a meter reading that updates a meter reading already present in the heat monitoring system. With new and updated meter readings in the heat monitoring system, a new calculation of heat consumption values is necessary, since heat consumption values of one heat consumption arrangement depends on meter readings of that heat consumption arrangement as well as all the others of the common heat supply. Thus, any change in meter readings associated with one heat submetering device of a heat consumption arrangement may affect the heat consumption values of other heat consumption arrangements.

In an embodiment, each of the meter readings transmitted at the first transmission time and each of the updated meter readings transmitted at the second transmission time may comprise metadata associated with a heat submetering device. Such metadata may comprise a heat submetering device identifier which is an identifier uniquely associated with a particular heat submetering device. Other types of metadata may comprise a type of a heat submetering device, a type of the associated heat consumption device, and a producer and a model of the heat submetering device and/or the associated heat consumption device.

In an embodiment said meter reading system comprises an acquisition system arranged to establish said communicative association between said plurality of heat submetering devices and said meter reading system.

By an acquisition system is understood a system capable of facilitating a communicative connection between the plurality of heat submetering devices and the meter reading system. The connection may be arranged to transmit measured meter readings from the heat submetering devices to the meter reading system.

In an embodiment said acquisition system is based on wireless communication such as radio communication.

The communication facilitated by the acquisition system may be based on various network technologies such as for example TCP/IP protocols such as IPv4, IPv6, various personal area networks PAN, e.g. Bluetooth or ZigBee, wireless network technologies under the WiFi label, i.e. based on IEEE 802.11 specifications, various Low-Power Wide-Area Network LPWAN technologies, e.g. NarrowBand IoT NB-IOT, LoRa-based technologies, various machine type communications, e.g. based on classical telecommunication networks such as LTE, GPRS, 3G, 4G, 5G, or LTE advanced for machine type communication LTE-MTC, etc., or other wired or wireless platforms.

In an embodiment said step of receiving in said meter reading system one or more measured meter readings is performed via said acquisition system.

In an embodiment said meter reading system comprises an auxiliary input interface arranged to receive auxiliary meter readings.

By auxiliary meter readings are understood meter readings that are not received in the meter reading system via the acquisition system. Having an auxiliary input interface is advantageous in that the meter reading system may be able to acquire more meter readings, for example from different sources, than if the system only had an acquisition system.

In an embodiment the auxiliary input interface of the meter reading system is arranged to receive auxiliary meter readings comprising measured meter readings and/or estimated meter readings. The auxiliary meter readings may for example be transmitted from the heat monitoring system or an external system other than the meter reading system and the heat monitoring system, for example a separate system for producing estimated meter readings to substitute missing meter readings from the non-received devices group of heat submetering devices, or a separate system providing measured meter readings from a meter reading acquisition system incompatible with the acquisition system of the meter reading system.

In an embodiment the auxiliary input interface of the meter reading system is further arranged to receive updated estimated meter readings. It may for example be advantageous that the meter reading system can receive updated estimated meter readings from the heat monitoring system or a separate system, when the heat monitoring system or separate system for some reason has changed a previously estimated meter reading.

In an embodiment the auxiliary input interface of the meter reading system is arranged to receive other types of data, such as a request prompting an update of a meter reading within the meter reading system. Other types of data may include factors, such as a reduction number and a capacity factor, used for processing of measured meter readings. The processing of measured meter readings may in this context be performed by the meter reading system. Other types of data may include reports of errors related to transmitted meter readings and/or updated meter readings. The other types of data may be transmitted via an auxiliary output interface of the heat monitoring system.

The auxiliary input interface of the meter reading system may be implemented with the same advantageous transmission technology as described above for the meter readings transmitted from the meter reading system to the heat monitoring system, i.e. by allocating the auxiliary meter readings in transmission batches, transmitting them, placing them in a batch queue, sending a batch receipt and first thereafter validate the transmission batches.

In an embodiment said steps of transmitting said meter readings and/or said updated meter readings are performed via an output interface of said meter reading system communicatively coupled to said heat monitoring system.

Any communication technology may be used between the meter reading system and the heat monitoring system. Preferably the public Internet is used for the communicative coupling between the systems, and the output interface may preferably comprise a wired or wireless network connection and e.g. appropriate transport layer implementations and possibly web service client implementations for the agreed communication technology.

In an embodiment said measured meter readings received in said meter reading system at said first acquisition time and said meter readings provided in said meter reading system at said second acquisition time are stored in a memory associated with said meter reading system.

Storing said received meter readings in one or more databases associated with said meter reading system is advantageous in that meter readings may be sent again to said heat monitoring system in case of the meter reading being lost in the transmission to the heat monitoring system, or if the heat monitoring system loses the meter reading which is necessary to perform calculations of heat consumptions. The storing of received meter readings also makes it possible for the meter reading system to estimate meter readings associated with the non-received devices group based on previous meter readings.

In an embodiment said steps of transmitting said meter readings and/or said updated meter readings are performed via an input interface of said heat monitoring system communicatively coupled to said meter reading system.

Any communication technology may be used between the meter reading system and the heat monitoring system. Preferably the public Internet is used for the communicative coupling between the systems, and the input interface may preferably comprise a wired or wireless network connection and e.g. appropriate transport layer implementations and possibly web service server implementations for the agreed communication technology.

In an embodiment said heat monitoring system comprises an auxiliary output interface arranged to transmit auxiliary meter readings.

The auxiliary output interface may preferably be implemented to match the auxiliary input interface of the meter reading system described above.

In an embodiment the auxiliary output interface of the heat monitoring system may be arranged to transmit other types of data, such as a request prompting an update of a meter reading within the meter reading system.

In an embodiment said meter readings transmitted to said heat monitoring system at said first transmission time and said updated meter readings transmitted to said heat monitoring system at said second transmission time are stored in a memory associated with said heat monitoring system after said validating said transmission batches.

Storing said transmitted meter readings in one or more databases associated with said monitoring system is advantageous in that estimates may be stored and subsequently be replaced by updated estimates or actual meter readings. A further advantage is that users of said monitoring system may access a history of previous meter readings and/or heat consumptions. Thereby, a user of said monitoring system may for example access the development of heat consumption over time. The storing of transmitted meter readings also makes it possible for the heat monitoring system to estimate meter readings associated with the non-received devices group based on previous meter readings.

In an embodiment said method comprises a step of providing said calculated heat consumption values for monitoring of heat consumption in one or more of said plurality of heat consumption arrangements.

The calculated heat consumption values may advantageously be provided in the corresponding heat consumption arrangements, e.g. apartments, for the benefit of the users of the heat consumption arrangement in control and regulation of their heat consumption, and/or detection of irregularities, defects or fraud. The heat consumption values may for example be provided in a heat consumption arrangement by means of a display mounted in the heat consumption arrangement, or by means of a device such as a computer, tablet computer or smartphone within the heat consumption arrangement which may access the heat consumption values, for example through an app or a website.

In an embodiment said method comprises a step of providing said re-calculated heat consumption values for monitoring of heat consumption in one or more of said plurality of heat consumption arrangements.

Providing also the re-calculated consumption values is advantageous, i.e. updating the previously provided information, for example by any of the means described above.

In an embodiment said steps of providing said calculated and/or re-calculated heat consumption values are performed via a consumption value output interface for providing said heat consumption values to a display.

The display may be a display of the heat consumption system, the heat consumption arrangement, or at an external system, e.g. a building manager where monitoring of heat consumption may facilitate detection of faults, etc.

In an embodiment a visualization of said heat consumption values is provided via said consumption value output interface.

Visualization of heat consumption values of individual heat consumption arrangements or heat consumption devices may include substantially real-time visualization of heat consumption values, such that the visualization always reflects the most recent heat consumption values based on the meter readings received in the heat monitoring system. The visualization of heat consumption values may for example comprise a visualization of heat consumption values in units of kWh. The visualization may in various embodiments comprise comparison of heat consumption values between heat consumption devices or heat consumption arrangements, or comparison of previous and current heat consumption values. Such comparisons may also be visualized to put a state of the heating system into perspective for increased usability in detection of irregularities, defects or fraud, or for control and regulation of heat consumption.

In an embodiment said estimated meter readings are established by said meter reading system.

Producing the estimated meter readings in the meter reading system and transmitting these at the first transmission time is advantageous in that a complete set of meter readings may be transmitted at once, i.e. meter readings pertaining to both the received devices group and the non-received devices group of the plurality of heat submetering devices, thereby providing all the readings necessary for the calculation step of the heat monitoring system. Further, the meter reading system may have access to a huge base of meter readings and other data, for example from many geographical locations, and/or from a long time back, thereby being able to produce good estimates using for example big data techniques.

In an embodiment said estimated meter readings are established by one or more of the plurality of heat submetering devices.

Although, a heat submetering device is communicatively coupled to the meter reading system, the heat submetering device may not be able to record measured meter readings, and therefore instead generate and pass on an estimated meter reading to the meter reading system. The estimated meter reading may therefore be produced in the heat submetering device and received in the meter reading system by the same route as measured meter readings, for example by said acquisition system.

In an embodiment said estimated meter readings used for said calculating are transmitted to said heat monitoring system from said meter reading system as one or more of said meter readings.

The meter readings transmitted at the first transmission time may advantageously include both representations of measured meter readings for heat submetering devices of the received devices group, as well as estimated meter readings for heat submetering devices of the non-received devices group.

In an embodiment said estimated meter readings used for said calculating are established by said heat monitoring system.

When having received the meter readings from the meter reading system, the heat monitoring system may generate estimated meter readings to substitute any missing meter readings in the transmission from the meter reading system.

In an embodiment said method comprises establishing estimated meter readings corresponding to all heat submetering devices of said non-received devices group of said plurality of heat submetering devices.

As explained above, all heat submetering devices with a common heat supply, whether from the received or non-received devices group, should eventually have a corresponding meter reading, measured or estimated, in order to calculate the heat consumption values for the individual heat consumption arrangements because the heating system is a submetered system and all calculations depend on all meter readings. Hence, estimated meter readings are generated corresponding to all devices in the non-received devices group.

In an embodiment said meter readings transmitted at said first transmission time of said monitoring period comprise meter readings corresponding to all of said plurality of heat submetering devices.

By all of said plurality of heat submetering devices is understood all the heat submetering devices associated with both the received devices group and the non-received devices group of heat submetering devices, of heat consumption arrangements sharing the common heat supply.

In an embodiment said meter readings provided in said meter reading system at said second acquisition time of said monitoring period comprise reading times being associated with said monitoring period.

The second acquisition time relates to the same monitoring period as the first acquisition time. In other words, if new meter readings are received, which belong to a later monitoring period, they would be associated with a first acquisition time of that later monitoring period. Hence, the reading times of meter readings received at the second acquisition time should preferably also be associated with the same monitoring period, as the reading times of the meter readings received at the first acquisition time is associated with.

In an embodiment said meter readings provided in said meter reading system at said second acquisition time of said monitoring period comprise measured meter readings.

Receiving measured meter readings at a second acquisition time in the meter reading system is advantageous since these measured meter readings represent readings that were not received in the meter reading system at the first acquisition time, i.e. these readings represent readings from the non-received devices group, for which estimated meter readings have probably already been generated and used for calculation. Being able to utilize these actual measured meter readings, that were initially not available to the meter reading system is advantageous since a subsequent calculation of heat consumption values using the measured values that have turned up instead of the estimated substitutes may better reflect actual levels of heat consumption, and thereby increase the usability of the monitoring.

In an embodiment said meter readings provided in said meter reading system at said second acquisition time of said monitoring period comprises updated estimated meter readings.

By the term updated estimated meter readings is understood a new estimate of a meter reading which is intended to replace a previously used estimated meter reading corresponding to the same heat submetering device of the non-received devices group. The update of an estimate may for example be relevant if better data for estimation becomes available, for example if measured values turns up which changes other previously estimated meter readings and suggest that other estimates should be re-estimated. In another example, the first estimated meter readings provided at the first transmission time may be less reliable estimates due to a requirement of short monitoring periods and thereby short time frames to deliver meter readings for all heat submetering devices, whereas a more time consuming estimation or a semiautomatic evaluation of the first, quick estimates, may produce more reliable estimated meter readings and thereby lead to updating the estimated meter readings with updated estimated meter readings.

In an embodiment said re-calculation is further based on updated estimated meter readings having reading times being associated with said monitoring period.

Said updated estimated meter readings comprise reading times, each reading time referring to a time of which an updated estimated meter reading is an estimate for.

The meter readings and updated meter readings may be associated with the monitoring period in several ways. Meter readings and/or updated meter readings may have reading times that are contained within the time period defined by the monitoring period, such as for example in the middle of the monitoring period or at the ends of the monitoring period. If for example a first meter reading has a reading time which is within the associated monitoring period, a calculation of heat consumption values corresponding to the monitoring period may be based on a comparison of the first meter reading and a second meter reading corresponding to the same heat submetering device and corresponding to a previous monitoring period. Such a comparison may involve an assessment of how much the meter reading have changed from one monitoring period to the next. If the first and second measured meter readings are located at the ends of their respective monitoring periods, such a comparison may yield an accurate assessment of how much the meter reading have changed over the latest monitoring period.

If a heat submetering device restarts its associated measured meter reading at the beginning of a monitoring period, a measured meter reading, comprising a reading time being in the opposite end of the monitoring period, may reflect only the heat consumption of that monitoring period.

A meter reading having a reading time may also be associated with a monitoring period even if the reading time is outside the time period defined by the monitoring period, i.e. heat consumption values associated with a monitoring period may be calculated on the basis of assessments of a difference between two meter readings having reading times before the beginning and after the end of the monitoring period respectively.

In an embodiment said monitoring period is a common monitoring period for all of said plurality of heat submetering devices.

As all the meter readings are used together in the calculation of each heat consumption value, the monitoring period is preferably common to all the heat submetering devices.

In an embodiment said step of providing meter readings in said meter reading system at said second acquisition time of said monitoring period, is performed via said acquisition system and said meter readings comprise measured meter readings.

If a heat submetering device of the non-received devices group for a certain monitoring period suddenly gets connected again and has stored the measured meter reading associated with that monitoring period, it may advantageously transmit the measured meter reading whenever possible so that it can be used in a transmission of updated meter readings. The time at which the meter reading system receives the somewhat old measured meter reading pertaining to a monitoring period for which meter readings have already been transmitted to the heat monitoring system, is called the second acquisition time.

In an embodiment said step of providing meter readings in said meter reading system at said second acquisition time of said monitoring period, is performed by said meter reading system and said meter readings comprise updated estimated meter readings.

Producing the updated meter reading estimates within the meter reading system itself is advantageous since the meter reading system is the system which receives measured meter readings from the non-received devices group of the plurality of heat submetering devices at the second acquisition time. When such a measured meter reading is received in the meter reading system it follows that a re-calculation of heat consumption values may be needed since a previous calculation may have been based on an estimate for that very reading which rendered the previously calculated heat consumption values approximations of actual levels of heat consumption. Since the meter reading system is preferably the system receiving any late arriving measured meter readings it is the system which may be able to first decide whether updates of estimated meter readings are necessary. Such an update may comprise an update of a previously transmitted estimated meter reading by an updated estimated meter reading. Also, in the above-described examples of the meter reading system making use of quick and slower estimation algorithms, an updated estimated meter reading may be provided by the meter reading system in the meter reading system to substitute a previously transmitted estimated meter reading.

In an embodiment said step of providing meter readings in said meter reading system at said second acquisition time of said monitoring period is performed via said auxiliary input interface and said meter readings comprise auxiliary meter readings.

The meter readings provided at the second acquisition time may be received from the heat monitoring system or an external system via the auxiliary input interface. An external system may for example be a separate estimation system or an alternative meter reading acquisition system not compatible with the acquisition system of the meter reading system. The auxiliary meter readings may be measured meter readings or estimated meter readings acquired or generated outside the meter reading system. For example, the heat monitoring system or external system may generate or receive an estimated meter reading, e.g. a manual meter reading from a monitoring operator or tenant, or an estimate adjusted in accordance with other information or agreements not available to the meter reading system and transmit it to the meter reading system for future reference and storage as an auxiliary meter reading. The received auxiliary meter reading may cause other previous estimates to be updated.

In an alternative embodiment, the method does not comprise a step of transmitting updated meter readings at the second transmission time, but instead all updated meter readings are generated in the heat monitoring system or an external system and provided in the meter reading system via the auxiliary input interface. The received auxiliary meter readings may be used as basis for future estimated meter readings. This embodiment may be combined with any of the features describe herein except the features related to the transmission at the second transmission time.

In an embodiment said auxiliary meter readings comprise measured meter readings.

Measured meter readings received as auxiliary meter readings may for example come from an external meter reading acquisition system or be manual meter readings from tenants, provided via the auxiliary input interface instead of via an acquisition system of the meter reading system.

In an embodiment said auxiliary meter readings comprise estimated meter readings.

Estimated meter readings received as auxiliary meter readings may for example come from an external estimation system or from the heat monitoring system if estimations are generated there.

In an embodiment said auxiliary meter readings comprise updated estimated meter readings.

Updated estimated meter readings received as auxiliary meter readings may for example come from an external estimation system or from the heat monitoring system, for example when the heat monitoring system by internal procedures or from external input becomes aware that a previous estimated meter reading can be improved.

In an embodiment said auxiliary meter readings are provided by said heat monitoring system.

The up-to-date meter readings should preferably be synchronized between the meter reading system and the heat monitoring system. The meter reading system may transmit updated meter readings by means of the transmission step at the second, or further second, transmission time, to ensure synchronization in that direction. However, it is also advantageous to allow the heat monitoring system to transmit updated meter readings in the form of auxiliary meter readings to the meter reading system, to synchronize in the opposite direction.

In an embodiment said monitoring period is no longer than a week, such as no longer than a day, for example no longer than an hour or 15 minutes, or a number of seconds.

As described above, the shorter the monitoring period, the higher the resolution in tracking the heat consumption and the usability of the monitoring in control and regulation, and/or detection of irregularities, defects and fraud.

In an embodiment said first acquisition time of a monitoring period is at the end of said monitoring period or later.

When the first acquisition time, and preferably the reading time, is at the end of the monitoring period, it may not be necessary to extrapolate meter readings to be comparable at the end of the monitoring period. However, interpolation or averaging may still be necessary if the reading time is significantly after the end of the monitoring period.

In an embodiment said reading times are periodic.

By periodic is understood that the reading times of measured meter readings of a heat submetering device are evenly spaced in time and recurring, i.e. separated in time by a fixed amount of time.

In an embodiment said first and second acquisition times are a first and a second acquisition time period, respectively.

In various embodiments, the meter reading system may not be able to acquire measured meter readings corresponding to the, possibly large, plurality of heat submetering devices at a single point in time. The measured meter readings may arrive over a period of time, which is herein anyway considered to be a common acquisition time. Preferably all measured meter readings received before the first transmission time may be considered belonging to the first acquisition time period.

In an embodiment said measured meter readings received at said first acquisition time are received distributed within said first acquisition time period.

Meter readings may not arrive at the metering system at the same point in time but may arrive during a time period in a plurality of acquisition steps within said time period. Therefore, acquisition time is not necessarily to be construed as a single point in time but may also be construed as a time period between the first meter reading is received until the first transmission time puts an end to which meter readings can be transmitted at the first transmission time.

In an embodiment said first and second transmission times are a first and a second transmission time period respectively.

Transmission of meter readings and updated meter readings may not occur at an instant of time, due to e.g. a large number of readings being transmitted and may require a period of time for completion. Therefore, the first and second transmission times may also be understood as time periods.

In an embodiment said monitoring period is a first monitoring period and the method of any of the preceding claims is repeated for a second monitoring period following said first monitoring period.

The method may advantageously be repeated for each new monitoring period, so as to establish a stream of calculated and re-calculated heat consumption values, one for each monitoring period. Thereby an evolution of heat consumption in the individual heat consumption arrangements may be provided, and used for control and regulation, or detection of irregularities, defects or fraud.

In an embodiment said step of transmitting one or more updated meter readings associated with a monitoring period is conditioned on an update criterion being met.

Transmission of updated meter readings may be performed as long as an update criterion is met. By an update criterion is understood one or more criteria that needs to be fulfilled for the meter reading system to transmit updated meter readings. The conditioning of the transmission of updated meter readings by an update criterion enables advantageous resource management in that this feature may for instance by utilized to allow the meter reading system to refrain from transmitting updates related to for example monitoring periods that are older than defined by the update criterion, or to not transmit updates unless first agreed with or requested by the heat monitoring system by means of an corresponding update criterion. In a preferred embodiment, the updates relating to recent monitoring periods are always transmitted, whereas updates relating to older monitoring periods, e.g. older than a week, a month or a year, depending on the type of usage of the heat monitoring values, are not transmitted or only transmitted on request. Such differentiation may advantageously be implemented by the conditioning of the transmission step with the update criterion.

In an embodiment said update criterion is received in said auxiliary input interface of said meter reading system.

Receiving the update criterion in the auxiliary input interface of the meter reading system is advantageous in that the update criterion may be defined externally from the meter reading system.

In an embodiment, the update criterion is defined by the heat monitoring system and transmitted to the auxiliary input interface of the meter reading system via the auxiliary output interface from the heat monitoring system. Thereby the heat monitoring system may adaptively control the criterion for updates, for example to manage their resources, or prevent updates in certain circumstances.

In an embodiment, the update criterion is defined by an external system different from the meter reading system and the heat monitoring system, e.g. from an end user being a person or a machine using the calculated heat consumption values.

In an embodiment said update criterion comprises an update expiration time, such as a predetermined number of monitoring periods or a predetermined time period.

In his context the term update expiration time may generally refer to an amount of time or a specific point in time determining if updated meter readings associated with a monitoring period may be transmitted to the heat monitoring system. In a preferred embodiment, the updates relating to recent monitoring periods are always transmitted, whereas updates relating to older monitoring periods are not transmitted in order to reduce resources. The update expiration time may preferably be set according to a balancing between resources required to performing the transmission and managing the data at both ends, the relevance or usability of older data and depending on the type of usage of the heat monitoring values. The update expiration time may for example be a week, a month or a year, or if more convenient for the system implementation, measured in numbers of monitoring periods, for example 10, 100, 256, 1000, or 65536 periods. In an embodiment, updates that has not been transmitted due to the update expiration time being up, may still be transmitted upon request or if fulfilling a different update criterion.

In an embodiment said step of transmitting one or more updated meter readings associated with a monitoring period is conditioned on an update request.

An update request may for example be receivable through the auxiliary input interface, for example for the heat monitoring system, or the update request may be a notification request from the meter reading system informing the heat monitoring system that updates are ready for transmission, and the heat monitoring system may respond with a request to have the updates transmitted. This embodiment is advantageous as it enables the heat monitoring system to be partly in control of updates, more particularly at least being able to deny or allow updates, for example according to the related monitoring periods being too old, being closed for further calculations, etc.

In an embodiment said step of transmitting one or more updated meter readings associated with a monitoring period is conditioned on said heat monitoring system having accepted an update request from said meter reading system.

In an embodiment meter readings received and/or provided in said meter reading system are maintained in said memory of said meter reading system for a predetermined time after said reading times of said meter readings, such as at least 1 year, for example at least 5 years.

The maintenance of transmitted data in the meter reading system is advantageous for allowing retransmission of previously transmitted data, if they disappear or get corrupted in the heat monitoring system. In an embodiment, the meter reading system thereby serves a secondary function as a backup of the raw data of the heat monitoring system used to make the heat consumption value calculations. This may be advantageous from a security perspective, as the meter reading system and heat monitoring system is typically completely separate systems at different locations implemented with different hardware and software and operated by different operators. The maintenance of data at the meter reading system for a certain amount of time also improves the possibility of analysing and tracing errors or peculiarities.

In an embodiment said measured meter readings received in said meter reading system are subject to validation by said meter reading system.

The meter reading system may perform a validation of the measured meter readings being received in the system. A measured meter reading that is corrupted, due to e.g. errors in the acquisition of the reading, may not be used for subsequent calculations and therefore an estimated meter reading may have to be used instead of it. The validation may range from very simple data type validation only disqualifying for example supposed measured meter readings that clearly are not numbers, to more advanced validation for example considering to disqualify a measured meter reading that is a negative number or lower than the last reading from the same meter, or is an unrealistically high number such as the maximum for the data type, or corresponds to decades' worth of consumption. The validation may be performed based on the received data themselves, or be based on prior knowledge such as previous readings from the same meters, etc.

In an embodiment any of said heat submetering devices having corresponding measured meter readings that does not pass said validation are assigned to said non-received devices group.

Before a meter reading is transmitted to the monitoring system, the meter reading is preferably validated in the meter reading system. A meter reading that does not conform with a validation standard in the meter reading system is discarded. Such a discarded meter reading may for example be a corrupted meter reading. The corresponding heat submetering device is then considered in the non-received devices group of heat submetering devices, as no validated measured meter reading exists from that heat submetering devices for the relevant monitoring period. This results in an estimated meter reading being established for the particular heat submetering device to substitute the discarded measured meter reading.

In an embodiment said meter readings and said updated meter readings transmitted to said heat monitoring system are subject to validation by said heat monitoring system.

The heat monitoring system may perform a validation of the transmitted meter readings and updated meter readings. Such a validation may be a formality check ensuring that the transmitted readings are not corrupted and conform with a data standard of the heat monitoring system. The validation may also be a checking of the meter reading compared with previous meter readings of the same heat submetering device, or simultaneous meter readings from other heat consumption arrangements of the common heat supply. If for example, a transmitted meter reading reflects a heat consumption being substantially different from a previous history, a meter reading may not be validated, or an investigation on possible other reasons may be effectuated. This could be the case if a meter reading reflects a significant heat consumption of a heat consumption arrangement with no expected heat consumption, e.g. the heat consumption arrangement is currently not in use and therefore not supposed to be heated, or the other way around, if a meter reading reflects substantially zero consumption in an occupied heat consumption arrangement during a mid-winter monitoring period. If a meter reading does not pass the validation in the heat monitoring system, depending on the reason, the heat monitoring system may for example request a re-transmission from the meter reading system, or discard the reading and produce or request an estimated meter reading for substitution. In the latter case, the heat monitoring system preferably transmits the generated substitute estimated meter reading back to the meter reading system, for example via an auxiliary output interface of the heat monitoring system. This is advantageous in order to keep the meter reading system and heat monitoring system synchronized with respect to the meter readings data that are used, which may also be relevant if the meter reading system is performing its data validation based on previous data.

In an embodiment said calculation and said re-calculation of heat consumption values are performed on the basis of meter readings and updated meter readings that are validated.

In an embodiment one or more of said plurality of heat submetering devices are arranged to transmit measured meter readings to said meter reading system.

In an embodiment, the transmission of measured meter readings from the plurality of heat submetering devices may not necessarily be a one-to-one transmission in which each heat submetering device directly transmits its measured meter readings to the meter reading system. The transmission of a measured meter reading may occur via one or more other heat submetering devices with means for direct communication with the meter reading system. In this sense, a measured meter reading from a first heat submetering device may be transmitted, for example wirelessly over a first distance, to a second heat submetering device or a so-called concentrator device. The second heat submetering device or concentrator may then transmit the measured meter reading, preferably along with other measured meter readings, to the meter reading system, for example over a second distance greater than the first distance. Collecting measured meter readings from more devices in one heat submetering device or concentrator and transmitting the measured meter readings from the latter is advantageous in that energy can be saved since wireless transmissions over long distances is more energy consuming than wireless transmissions over shorter distances.

The transmission of measured meter readings from the heat submetering devices to the meter reading system may also be performed by wired connections, or a mix of communication technologies.

In an embodiment one or more of said plurality of heat submetering devices are battery powered.

Powering a heat submetering device by a battery is advantageous in that a greater freedom of installation on a heat consumption device may be achieved. Furthermore, a battery powered heat submetering device is not susceptible to power outages caused by a failing power grid.

In an embodiment said plurality of heat submetering devices comprise consumption sub-meters, e.g. heat cost allocator sub-meters.

In an embodiment one or more of said heat submetering devices forms part of a distributed network, e.g. forming part of said acquisition system.

Having a distributed network of connected heat measuring devices is advantageous in that power consumption of said one or more heat measuring devices may be reduced. Performing a measurement in a heat measuring device typically requires less energy than transmitting measurements wirelessly, irrespective of the fact that a transmission may comprise several meter readings. Therefore, it is advantageous to consolidate meter readings from several heat measuring devices in a single transmission, thereby saving the energy of transmission which would otherwise be required if each meter reading were to be transmitted locally from its corresponding heat measuring device.

In an embodiment one or more of said one or more measured meter readings received in said meter reading system are received from a concentrator in communicative connection with said plurality of heat submetering devices, e.g. forming part of said acquisition system.

A concentrator may be used to accumulate submeter readings from a plurality of measuring devices and the concentrator may then forward the readings to the metering system.

In an embodiment said step of receiving measured meter readings comprises receiving accumulated measured meter readings from said plurality of heat submetering devices.

When readings are sent to the metering system, the readings may constitute a set of accumulated readings captured by the measuring devices in a period of time leading up to the time at which the readings are sent.

In an embodiment said plurality of heat submetering devices are associated with, such as mounted on, a plurality of heat consumption devices.

In an embodiment said heat consumption arrangements supplied with a common heat supply are comprised by a building.

In an embodiment said energy consumption is derived from said common heat supply by a main meter.

The energy consumption corresponding to the plurality of heat consumption arrangements may be derived by a main meter. A main meter is arranged to measure a flow of energy or other physical entities from which a flow of energy can be derived. The main meter may be an energy meter of a district heating system monitored by at least the provider of the heating medium. If the common heat supply comprises for example an oil burner, the main meter may be a fuel flow meter arranged to measure a flow of fuel being burned in the oil burner. An energy consumption for a period of time may be derived from an amount of fuel having passed the fuel flow meter over that same period of time. The main meter may also be an electricity meter in the case where the common heat supply comprises an electrical heat pump arranged to convert electrical energy into heated water or air.

In an embodiment said common heat supply comprises one or more heat supply selected from the list of a district heating supply, a fluid fuel burner such as an oil or gas burner, a solid fuel burner such as a coal or wood burner and a heat pump solution.

By a heating medium is understood any fluid capable of transferring heat, such as a liquid, for example water or oil, or a gas, for example air or steam.

In an embodiment said calculated and said re-calculated heat consumption values correspond to all of said plurality of heat consumption arrangements.

In an embodiment an estimated meter reading corresponding to a heat submetering device is at least partly based on an extrapolation of previous measured meter readings corresponding to said heat submetering device.

An estimated meter reading may be established on the basis of an extrapolation of previous measured meter readings. By an extrapolation is understood that the estimated meter reading is based on a past history of heat consumption. This is advantageous in that the estimated meter reading may be based on the previous consumption behaviours of the tenant of the heat consumption arrangement in which the heat submetering device is located in. A history of previous heat consumption behaviour may be used as an indication of a future expected heat consumption behaviour.

In an embodiment an estimated meter reading corresponding to a heat submetering device is at least partly based on measured meter readings corresponding to other heat submetering devices of said plurality of heat submetering devices.

An estimated meter reading may be established on the basis of measured meter readings corresponding to other heat submetering devices. In a heat consumption arrangement comprising a plurality of heat consumption devices, a meter reading corresponding to one of the heat consumption devices may be estimated on the basis of measured meter readings corresponding to other heat consumption devices of that heat consumption arrangement, and such a calculation may for example comprise an average of all the other measured meter readings. The estimated meter reading may also be based on measured meter readings from other heat consumption arrangements. Usage of measured meter readings corresponding to another heat consumption arrangement may be beneficial if the two heat consumption arrangements have a previous history of substantially identical heat consumptions.

An aspect of the invention relates to a system for monitoring heat consumption in a plurality of individual heat consumption arrangements supplied with a heating medium by a common heat supply, the system comprising:
a plurality of heat submetering devices distributed in said plurality of individual heat consumption arrangements;
a meter reading system communicatively coupled to said plurality of heat submetering devices;
a heat monitoring system communicatively coupled to said meter reading system and comprising a batch queue;
wherein a part of said plurality of heat submetering devices belongs to a received devices group of said plurality of heat submetering devices and the remaining part belongs to a non-received devices group of said plurality of heat submetering devices for a monitoring period;
wherein said meter reading system is arranged to receive measured meter readings each corresponding to a respective heat submetering device of said received devices group of said plurality of heat submetering devices;
wherein said meter reading system is further arranged to transmit meter readings to said heat monitoring system, at least one of said meter readings comprising a representation of one of said received measured meter readings, said transmitting being arranged to comprise:
   allocating said meter readings to transmission batches and for each of said transmission batches:
   transmitting said transmission batch to said heat monitoring system;
   placing said transmitted transmission batch in said batch queue of said heat monitoring system;
   receiving in said meter reading system from said heat monitoring system a batch receipt for said transmitted transmission batch;
wherein said heat monitoring system is arranged to validate said transmission batches of said batch queue;
wherein said heat monitoring system is arranged to calculate heat consumption values corresponding to one or more of said plurality of heat consumption arrangements for said monitoring periods, for each monitoring period the said calculating being arranged to comprise:
   providing an energy consumption derived from said common heat supply and being associated with said monitoring period;
   selecting meter readings corresponding to each of said plurality of heat submetering devices, and being associated with said monitoring period;
   wherein said selected meter readings comprise estimated meter readings corresponding to heat submetering devices of said non-received devices group of said plurality of heat submetering devices and said at least one of said meter readings comprising said representation of one of said measured meter readings.

In an embodiment said system for monitoring heat consumption is arranged to carry out the method according to any of the above paragraphs or said system for monitoring heat consumption includes any of the system features of any of the above paragraphs.

The system for monitoring heat consumption may advantageously be enhanced by any of the embodiments and improvements described above in relation to the method. It is clear from the above, which additional features should be implemented in the meter reading system, the heat monitoring system, the heat submetering devices, or are additional system parts.

### The drawings

Various embodiments of the invention will in the following be described with reference to the drawings where
fig. 1 illustrates a building comprising heat consumption arrangements supplied with a heating medium by a common heat supply according to an embodiment of the invention,
fig. 2 illustrates a possible way of communication between heat submetering devices and a heat monitoring system via a meter reading system comprising an acquisition system according to an embodiment of the invention,
fig. 3 illustrates a consumption value output interface according to an embodiment of the invention,
fig. 4 illustrates a transmission of transmission batches from the meter reading system to the heat monitoring system and a subsequent calculation of heat consumption values for a monitoring period according to an embodiment of the invention,
fig.5 illustrates that a validation response is transmitted back to the meter reading system after the meter reading system has transmitted transmission batches to the heat monitoring system according to an embodiment of the invention,
fig.6 illustrates that transmission batches received in a batch queue are placed in a different order within the batch queue according to an embodiment of the invention,
fig. 7 illustrates that transmission batches received in a batch queue are placed in a different order within the batch queue, the ordering being based on a priority level of the transmission batches, according to an embodiment of the invention,
fig. 8 illustrates that the batch queue may comprise a first and a second batch queue each arranged to handle transmission batches with different priority levels, according to an embodiment of the invention,
fig. 9 illustrates that the meter reading system may be associated with a plurality of heat monitoring systems and a plurality of buildings,
fig. 10 illustrates a flow chart of the method of monitoring heat consumption values for a plurality of heat consumption arrangements according to an embodiment of the invention,
fig. 11 shows a process chart illustrating the timing of the acquisitions of measured meter readings, the transmission of meter readings and updated meter readings as well as the calculations of heat consumption values according to an embodiment of the invention,
fig. 12 shows another process chart in which estimated meter readings and updated estimated meter readings are produced by the meter reading system and transmitted to the heat monitoring system according to an embodiment of the invention,
fig. 13 illustrates an application of the method on more than one monitoring period according to an embodiment of the invention,
fig. 14 illustrates an auxiliary communication between the heat monitoring system and the meter reading system comprising an auxiliary output interface and an auxiliary input interface of the two respective systems according to an embodiment of the invention,
fig. 15 illustrates an alternative communication with an external system via the auxiliary input interface according to an embodiment of the invention, and
fig. 16 illustrates an alternative communication between an external system and the heat monitoring system according to an embodiment of the invention.

### Detailed description

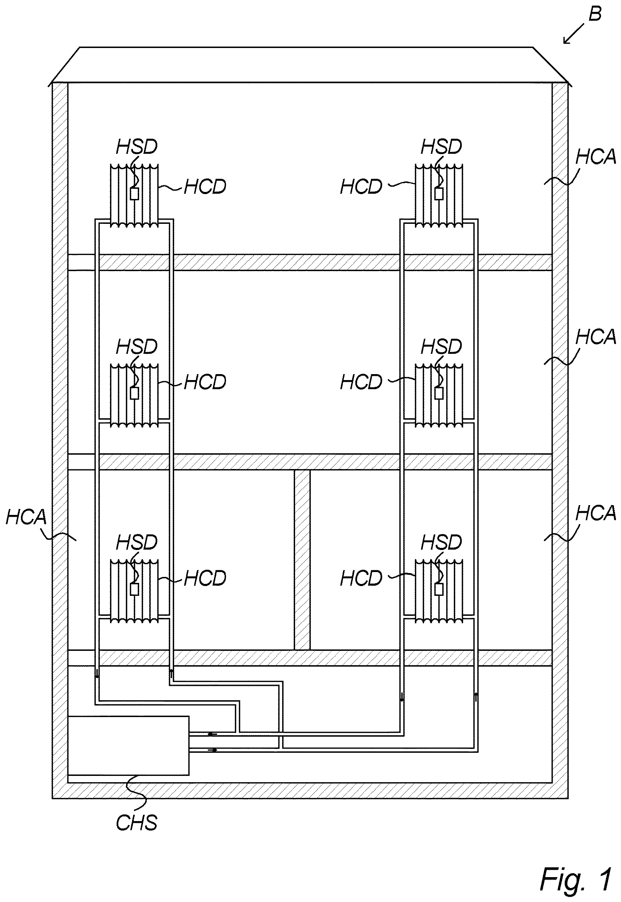

Fig. 1 illustrates an embodiment of the invention. The drawing shows a building (B), such as an apartment housing, comprising four heat consumption arrangements (HCA) located on multiple floors. In this context, the heat consumption arrangements (HCA) may be understood as individual apartments of the apartment housing. The heat consumption arrangements differ in size as exemplified by the two upper heat consumption arrangements having a substantially larger floor area than the two lower heat consumption arrangements that shares a common floor. Each heat consumption arrangement (HCA) is equipped with one or more heat consumption devices (HCD) arranged to provide the heat consumption arrangements (HCA) with space heating. The heat consumption devices (HCD) may, in this context, be understood as heat exchangers in the form of upright standing radiators. Each heat consumption device (HCD), or radiator, is supplied with a heating medium from a common heat supply (CHS) through a network of piping suitable of transferring the heating medium from the common heat supply (CHS) to the heat consumption devices (HCD). In the example of Fig. 1, the six heat consumption devices (HCD) are coupled by two loops of piping, such that the three radiators of each loop are coupled in parallel to the loop. Many other ways of connecting the heat consumption devices (HCD) to the common heat supply (CHS) with piping is conceivable for the skilled person in space heating, however the plurality of heat consumption devices are all supplied with a heating medium by the common heat supply (CHS). The heating medium may be any sort of liquid or gas capable of transferring heat, such as water or steam.

The common heat supply (CHS) shown in this figure may be an actual supplier of a heating medium, such as an oil burner, or merely an input/output terminal for a heating medium supplied from the outside of the building (B), which may be the case for a district heating system. The common heat supply (CHS) may comprise a main meter (not shown) arranged to measure a total energy consumption (EC) of the building (B). The total energy consumption (EC) comprises at least the sum of heat energy consumptions of all the heat consumption arrangements (HCA) but may also comprise heat losses of the piping due to for example ineffective heat insulation of the piping network, and further heat energy used for space heating of rooms shared by all the heat consumption arrangements, such as a cellar room or a ceiling.

Owing to the different sizes of the heat consumption arrangements (HCA), different consumption behaviours of the tenants of the building (B) and the different conditions of the heat consumption arrangements (HCA), the heating requirements may vary greatly between the individual heat consumption arrangements (HCA). Since, the heat consumptions of the heat consumption arrangements (HCA) not necessarily represents equal shares of the total energy consumption (EC), the heat consumptions of the heat consumption arrangements (HCA) cannot directly be inferred from the energy consumption (EC). In order to correctly account for the individual heat consumptions of the heat consumption arrangements (HCA), each heat consumption arrangement's true share of the total energy consumption (EC) of the building (B) has to be established. This may be done by submetering of the individual heat consumption devices (HCD) of the heat consumption arrangements (HCA).

Each of the heat consumption devices (HCD) is monitored by a heat submetering device (HSD). The heat submetering devices (HSD) are arranged to monitor a representation of heat consumption of its associated heat consumption device (HCD). By measuring representations of heat consumption of the individual heat consumption arrangements (HCA) and comparing these to the total energy consumption (EC) of the building (B), the individual heat consumptions of the heat consumption arrangements can correctly be accounted for.

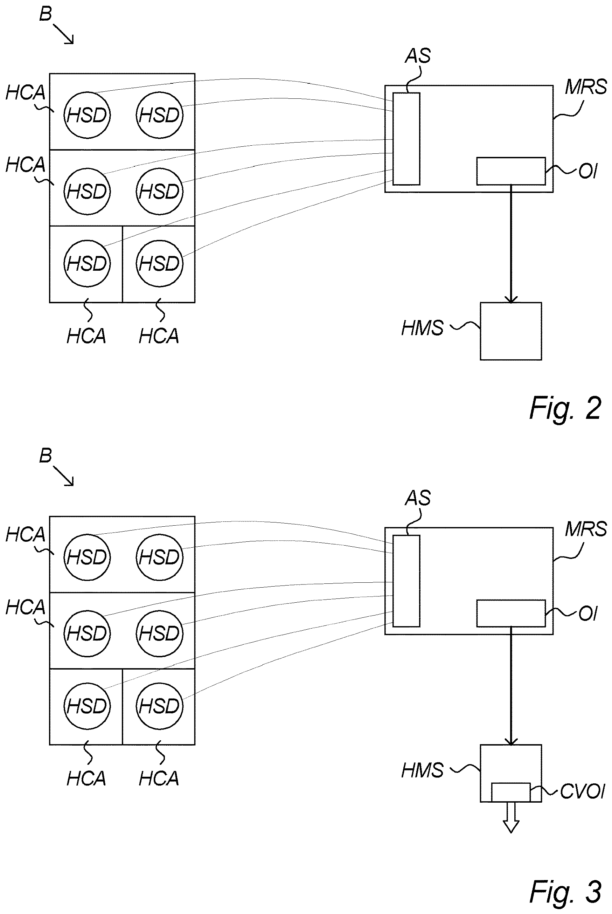

Fig. 2 shows an embodiment of the invention. The drawing shows example of Fig. 1 with the building (B) comprising the four heat consumption arrangements (HCA) comprising the six heat submetering devices (HSD). The six heat submetering devices (HSD) are communicatively coupled to a meter reading system (MRS) as indicated by the six lines terminating in an acquisition system (AS) comprised by the meter reading system (MRS). By communicative coupling is understood that each heat submetering device (HSD) is arranged to pass on measurements of heat consumption to the meter reading system (MRS). The measurements recorded by the heat submetering devices (HSD) are herein referred to as measured meter readings (MMR). The communication of measured meter readings (MMR) from a heat submetering device (HSD) to the meter reading system may occur from the heat submetering device (HSD) itself or through concentrators or neighbouring heat submetering devices (HSD), e.g. one or more of the heat submetering devices (HSD) is arranged to collect measured meter readings (MMR) from other devices and pass these, along with their own measured meter readings (MMR), on to the meter reading system (MMR).

The meter reading system (MRS) is understood as a system capable of acquiring measured meter readings from the heat submetering devices (HSD), and the acquisition of meter readings is performed via an acquisition system (AS) associated with the meter reading system (MRS). The acquisition system (AS) is a system that facilitates a communication channel between the heat submetering devices (HSD) and the meter reading system (MRS), such that measurements from the heat submetering devices (HSD) can be transferred into the meter reading system (MRS). Preferably the acquisition system facilitates a wireless connection, for instance based on radio frequency communication, e.g. a proprietary remote meter reading system, a low-power Wi-Fi technology, etc, or alternatively, the acquisition system (AS) may comprise wired connections to the heat submetering devices (HSD). The acquisition system may also comprise a mix of communication technologies.

The meter reading system (MRS) further comprises an output interface (OI) arranged to transmit meter readings (MR) to a heat monitoring system (HMS). The meter readings (MR) may comprise representations of the measured meter readings (MMR) acquired in the meter reading system (MRS), or other meter readings (MR) such as estimated meter readings or meter readings acquired otherwise. The measured meter readings may be processed, for example with respect to format or by application of correction factors, within the meter reading system (MRS) before being transmitted to the heat monitoring system (HMS).

The heat monitoring system (HMS) is a system arranged to monitor levels of heat consumption corresponding to the heat consumptions of the heat consumption arrangements (HCA) of the building (B). These heat consumptions are also referred to as heat consumption values (HCV). The heat monitoring system may receive an energy consumption (EC) of the building (B) as measured by the main meter (not shown). On the basis of the meter readings (MR) received from the meter reading system (MRS) and the energy consumption (EC) of the building (B), the heat monitoring system (HMS) can calculate heat consumption values (HCV) of the individual heat consumption arrangements (HCA) of the building (B).

Fig. 3 shows a further embodiment where the heat monitoring system (HMS) further comprises a consumption value output interface (CVOI). The consumption value output interface (CVOI) is an interface through which the calculated heat consumption values (HCV) are provided. The calculated heat consumption values (HCV) may be provided for subsequent visualization of the heat consumption values (HCV). As an example, the heat monitoring system (HMS) may be associated with a display arranged to visualize the heat consumption of one or more of the heat consumption arrangements (HCA) of the building (B). The heat consumption values (HCV) provided by the consumption value output interface (CVOI) may alternatively be accessed by an external system different from the meter reading system (MRS) and the heat monitoring system (HMS). Examples of external systems may be processing devices such as handheld devices used by the tenants or operators of the building (B).

The heat consumption values (HCV) may be represented using various units of heat, such as kilowatt hours and units derived from joule, such as kilojoule and megajoule.

The heat monitoring is conducted with respect to monitoring periods (MP). Monitoring period (MP) is the time resolution of the monitoring of heat consumption and is understood as the divisions of time for which heat consumption values (HCV) are calculated for the heat consumption arrangements (HCA). The monitoring period may for example be a week, a day, an hour, a minute, etc. A monitoring period (MP) of an hour, means that the heat monitoring system (HMS) calculates heat consumption values for every hour, and an operator, tenant, a machine or another user is thereby able to 'zoom in' and monitor the heat consumption on an hourly basis. Reducing the monitoring period to for example one second, increases the monitoring resolution considerably, and allows one to follow the heat consumption second by second.

Meter readings (MR) and energy consumption (EC) being associated with a certain monitoring period (MP) is referring to the meter readings (MR) and energy consumption (EC) that are used to calculate the heat consumption values (HCV) for that monitoring period (MP). Depending in the desired accuracy and the practically implementable timing, the meter readings (MR) for a certain monitoring period (MP) may be synchronized with the end of that monitoring period or simply be measured in a time span around the end of the monitoring period or at any time. The error produced by non-ideal reading times in relation to the monitoring period may be considered insignificant to the desired accuracy, may be compensated for by various averaging or interpolation techniques. The visualization of heat consumption values (HCV) may comprise a visualization of heat consumption for one or more previous monitoring periods (MP).

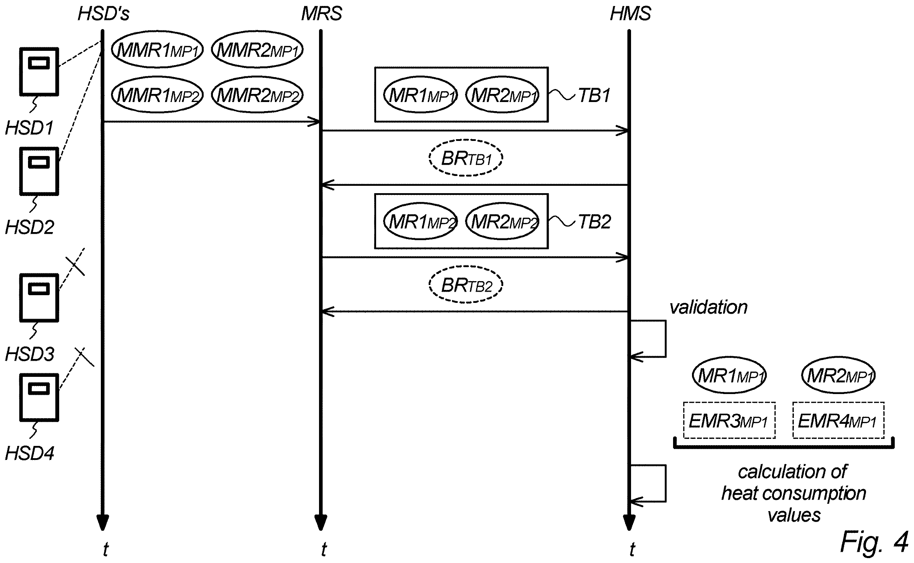

Fig. 4 illustrates an embodiment of the invention. The drawing shows an embodiment of the process of receiving measured meter readings (MMR) in the meter reading system (MRS), the transmission of meter readings (MR) to the heat monitoring system (HMS), and the subsequent calculation of heat consumption values (HCV). The drawing shows an example in which the heat consumption arrangements comprises four heat submetering devices (HSD1-HSD4) associated with the meter reading system (MRS). For one or more reasons, the third and fourth heat submetering devices (HSD3,HSD4) are unable to successfully deliver measured meter readings (MMR) to the meter reading system (MRS), thus, the meter reading system (MRS) only receives measured meter readings (MMR1,MMR2) corresponding to the first and second heat submetering devices (HSD1,HSD2). The meter readings (MMR1,MMR2) received in the meter reading system (MRS) are associated with monitoring periods, so the measured meter readings (MMR1_{MP1},MMR1_{MP2}) corresponding to the first heat submetering device (HSD1) may be associated with more monitoring periods (MP), as for example a first and a second monitoring period (MP1,MP2) as shown in the drawing. The measured meter readings (MMR) received in the meter reading system (MRS) may be processed by the meter reading system to form meter readings (MR). The meter readings (MR) are transmitted to the heat monitoring system (HMS) in transmission batches, and in this example, meter readings from both the first and second heat submetering devices (MR1_{MP1},MR2_{MP1}) associated with the first monitoring period (MP1) are allocated to a first transmission batch (TB1) and meter readings (MR1_{MP2},MR2_{MP2}) associated with the second monitoring period (MP2) may be allocated and transmitted in a second transmission batch (TB2).

Upon receiving each transmission batch (TB1,TB2), the heat monitoring system (HMS) may return a batch receipt (BR1,BR2) which in this context may be understood as a notice that the transmission batches (TB1,TB2) are received in a batch queue (BQ) of the heat monitoring system (HMS). In this example, a batch receipt (BR_{TB1}) is transmitted to the meter reading system (MRS) following the transmission of the first transmission batch (TB1). The meter reading system (MRS) may be arranged such that it does not transmit a new transmission batch (TB2), before receiving a batch receipt (BR) corresponding to the previously transmitted transmission batch (TB1), and this is exemplified in the drawing by the second transmission batch (TB2) being transmitted after the first batch receipt (BR_{TB1}) is received in the meter reading system (MRS). Following the transmission of the second transmission batch (TB2), a second batch receipt (BR_{TB2}) corresponding to the second transmission batch (TB2) is received in the meter reading system (MRS).

The heat monitoring system (HMS) may validate the transmission batches (TB1,TB2) and process the content of the batches, such as opening the transmission batches (TB1,TB2) to retrieve the meter readings (MR) and possibly validating the meter readings. The validation may for example be a formality check ensuring that the received transmission batches (TB1,TB2) comprise meter readings (MR) that are not corrupted and thus conform with a data standard of the heat monitoring system (HMS). The validation may also be a checking of whether the transmitted meter readings (MR) are making sense when compared to e.g. previous meter readings (MR) corresponding to the same heat submetering device (HSD). A meter reading (MR) may for example not be validated if the meter reading (MR) reflects an unusually high heat consumption when compared to previous readings of heat consumptions.

The heat monitoring system (HMS) then, in the example of Fig. 4, calculates heat consumption values for the first monitoring period (MP1). Such a calculation requires meter readings (MR) corresponding to all of the heat submetering devices (HSD1-HSD4), however, in the figure, the heat monitoring system (HMS) is only in possession of meter readings (MR) corresponding to representations of measured meter readings (MMR1,MMR2) of the first and second heat submetering devices (HSD1,HSD2). Therefore, the heat monitoring system may use estimated meter readings (EMR3_{MP1},EMR4_{MP1}) corresponding to the third and fourth heat submetering devices (HSD3,HSD4), and these estimated meter readings have to be associated with the same first monitoring period (MP1). The estimated meter readings may be established by the meter reading system (MRS) and similarly be transmitted to the heat monitoring system (HMS) in the same or different transmission batches (TB1,TB2, TBn), or they may be established in the heat monitoring system (HMS).

Following, a calculation of heat consumption values (HCV) associated with the first monitoring period (MP1), the heat monitoring system may calculate heat consumption values (HCV) associated with the second monitoring period (MP2). Such a calculation may be performed similarly to the calculation for the first monitoring period (MP1). The heat monitoring system may also perform the calculation for the first monitoring period (MP1) after the validation of the first transmission batch (TB1) and wait with the validation of the second transmission batch (TB2) and calculation for second monitoring period (MP2).

The heat monitoring system may continuously calculate heat consumption values (HCV) for successful monitoring periods (MP), and furthermore continuously calculate heat consumption values (HCV) for the same monitoring period (MP) as meter readings (MR) associated with this monitoring period are received in the heat monitoring system (HMS). As an example, the third and fourth heat submetering devices (HSD3,HSD4) may at a later time, for example after the heat monitoring system (HMS) has calculated heat consumption values (HCV) corresponding to the second monitoring period (MP2), deliver measured meter readings (MMR) associated with the first monitoring period (MP1). Representations of the measured meter readings may then be transmitted to the heat monitoring system (HMS) which may then re-calculate the heat consumption values (HCV) corresponding to the first monitoring period (MP1), thus replacing the previously used estimated meter readings (EMR3_{MP1},EMR4_{MP1}).

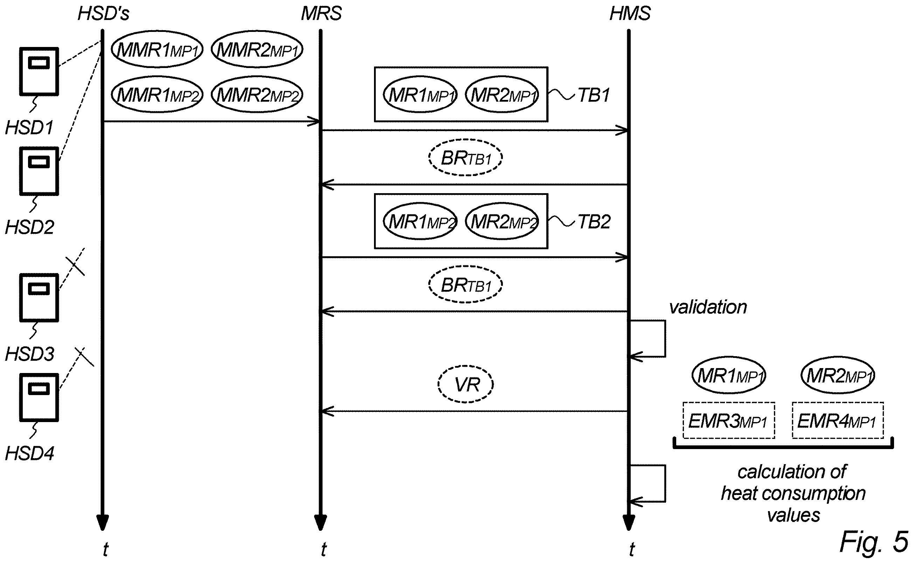

Fig. 5 illustrates an embodiment of the invention which, in addition to the embodiment in Fig. 4, features a validation response (VR) which is sent to the meter reading system (MRS) after having performed the validation of the transmission batches (TB1,TB2) in the heat monitoring system (HMS). Preferably a validation response (VR) is sent after each validation, after which the heat monitoring system proceeds with the next validation. The validation response (VR) may be seen as a confirmation that the heat monitoring system (HMS) has accepted the received transmission batches, and that they conform with a validation standard of the heat monitoring system. Preferably meter readings included in the validated transmission batch have also been validated during the validation, and the validation response likewise confirms the status of this validation. If the validation as shown errors, irregularities, etc., this may preferably by reflected in the validation response, possibly including a request for re-transmission.

In an embodiment, the heat monitoring system includes a unique identifier in each batch receipt (BR) to allow future reference to the respective transmission batch (TB). This unique identifier is then repeated in the corresponding validation response (VR) to enable the meter reading system to process the validation response in the light of the respective transmission batch. Several other transmission batches may have been transmitted by the meter reading system to the same or different heat monitoring systems before the validation response related to the first transmission batch arrives. This may be due to the heat monitoring system postponing the processing of new data, or because the heat monitoring system decides a different order of processing than the order of transmission, as both possibilities are available with the present invention. The unique identifier of the batch receipt (BR) may in various embodiments further be used by the meter reading system (MRS) to request status updates relating to the processing of the transmission batch and thereby when to expect the validation response (VR) and/or to request a validation response (VR). The latter may for example be relevant in an embodiment where validation responses are only transmitted upon request from the meter reading system.

In an embodiment, the meter reading system includes a unique reference in each transmission batch (TB) to allow future reference to the respective transmission batch (TB) or indicate an address for delivering the validation response (VR). The heat monitoring system (HMS) may then repeat the unique reference in the validation response (VR) or use the unique reference to ensure correct delivery of the validation response to the meter reading system.

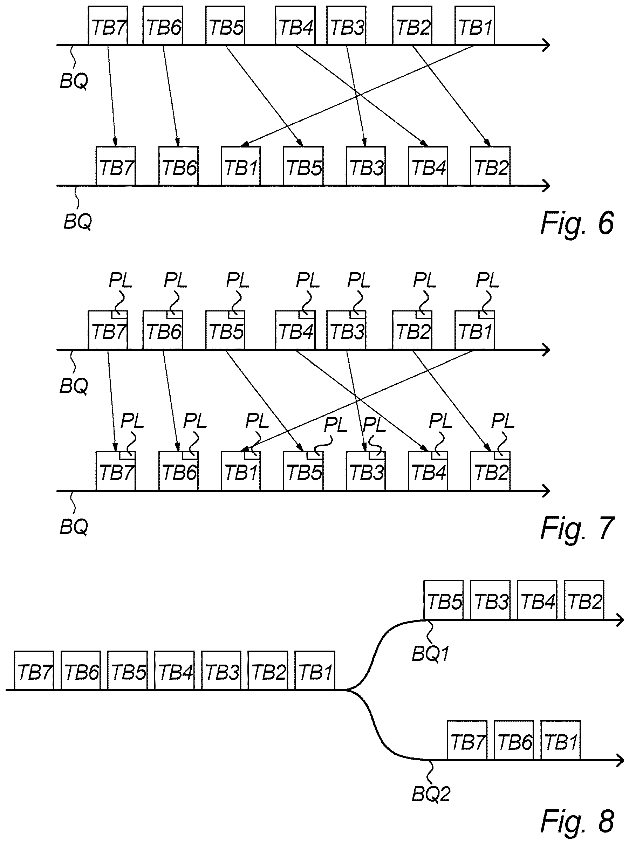

Fig. 6 illustrates an embodiment of the invention. The drawing shows that the transmission batches (TB1-TB7) are received in the batch queue (BQ) of the heat monitoring system (HMS). The transmission batches (TB1-TB7) are received in the batch queue in ascending order such that the first transmission batch (TB1) is received before the second transmission batch (TB2), which is received before the third transmission batch (TB3), and so on, i.e. the first transmission batch (TB1) is in the front of the batch queue (BQ). However, the ordering of the transmission batches (TB1-TB7) in the batch queue (BQ) may not be the most optimal order for the processing of the transmission batches (TB1-TB7), i.e. it may for some reasons be advantageous to process the second and fourth transmission batches (TB2,TB4) before any of the other transmission batches (TB1,TB3,TB5-TB7). This may for example be due to their associated monitoring period (MP), the building they relate to, or if they relate to high-priority data such as an alarm. The new ordering of the transmission batches (TB1-TB7) is shown in the lower batch queue (BQ). The two batch queues (BQ) shown in the figure may be the same batch queue (BQ) or be separate batch queues (BQ) such that the transmission batches (TB1-TB7) are initially received in one batch queue (BQ) which may be viewed as a cyclic storage batch queue where the transmission batches (TB1-TB7) are stored and may be picked from. The transmission batches (TB1-TB7) may then be picked an put in any ordering in another queue, which may be viewed as a processing batch queue of the heat monitoring system. The processing batch queue may then directly dictate the order in which the transmission batches (TB1-TB7) are processed by the heat monitoring system.

Fig. 7 illustrates an embodiment of the invention which builds on the embodiment illustrated in Fig. 6. In this figure, the transmission batches (TB1-TB7) comprises a priority label (PL) which can be used to indicate the level of importance of processing the corresponding transmission batch (TB 1-TB7) or indicate information that the heat monitoring system can use to assign such level of importance. This level of importance may for example be shown by a priority level, where an increasing priority level is indicative of an increasing level of importance. In this figure, the second and fourth transmission batches (TB2,TB4) have priority labels with a higher priority level than the other transmission batches (TB1,TB3,TB5-TB7), and are therefore put in front of the batch queue (BQ). Alternatively, the priority label (PL) may include for example information about the datatype, e.g. an alarm, a meter reading, an updated meter reading, etc., and the heat monitoring system may then decide which datatypes to assign which level of importance. The second and fourth transmission batches (TB2,TB4) of Fig. 7 may have priority labels indicating they contain alarms, and thereby be assigned with a higher priority level than the other transmission batches (TB1,TB3,TB5-TB7), and are therefore put in front of the batch queue (BQ)

Fig. 8 illustrates an embodiment of the invention where the batch queue (BQ) comprises a first and a second batch queue (BQ1,BQ2). The transmission batches (TB1-TB7) are received in the heat monitoring system and distributed into two batch queues (BQ1,BQ2). In this drawing the first batch queue (BQ1) is a batch queue (BQ) arranged to receive transmission batches (TB) having a higher level of priority than the transmission batches received in the second batch queue (BQ2). The distribution of the transmission batches (TB1-TB7) into the two batch queues (BQ1,BQ2) may be performed on the basis of a priority label (PL) as described above with respect to Fig. 7 such that transmission batches (TB) having a priority label (PL) with a priority level greater than or equal to a threshold priority level are received in the first batch queue (BQ1), and transmission batches (TB) having a priority label (PL) with a priority level below the threshold priority level are received in the second batch queue (BQ2). The heat monitoring system (HMS) may be arranged to process transmission batches (TB) located in the first batch queue (BQ1) before processing the transmission batches (TB) located in the second batch queue (BQ2). In this sense, the first transmission queue (BQ1) is a high-priority batch queue and the second batch queue (BQ2) is a low-priority queue. Although the figure depicts two batch queues (BQ1,BQ2), any number of batch queues (BQ) is conceivable. The heat monitoring system may also sort the transmission batches into the several batch queues in accordance with the datatype of their content as indicated for example by a priority label (PL) as described above.

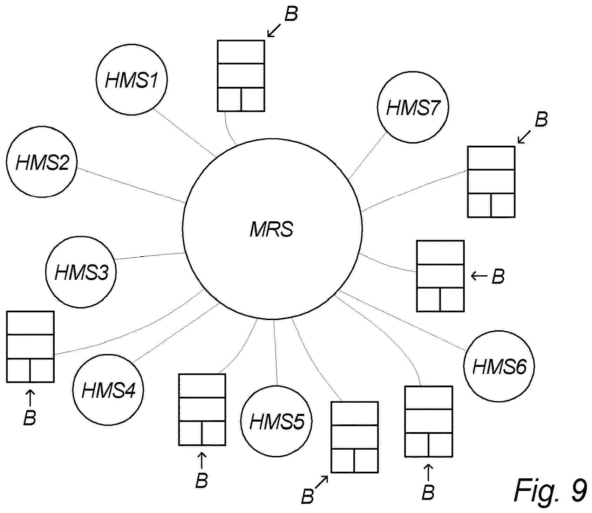

Fig. 9 illustrates an embodiment of the invention wherein the meter reading system (MRS) is communicatively coupled to several heat monitoring systems (HMS1-HMS7) and heat submetering devices (HSD) (not shown in the figure) corresponding to heat consumption arrangements (HCA) of several buildings (B). The buildings (B) may be apartment housings comprising heat consumption arrangements (HCA) in the form of apartments. The heat monitoring systems (HMS1-HMS7) may be associated with any number of heat submetering devices (HSD) and buildings (B), for example, each building (B) may be associated with its own heat monitoring system (HMS). Likewise, the meter reading system (MRS) may be associated with any number of heat monitoring systems (HMS). In such an embodiment where data from several buildings are transmitted to several heat monitoring system, all passing through a meter reading system, the present invention is particularly advantageous, as it improves the efficiency of the transmissions, disconnects processing of the transmission between the meter reading system and the several heat monitoring systems from the validation and calculation processing taking place at the heat monitoring system, provides both the meter reading system and heat monitoring system with improved control and flexibility over their own processing tasks, by decreasing the dependency on how each other performs and performs their processing.

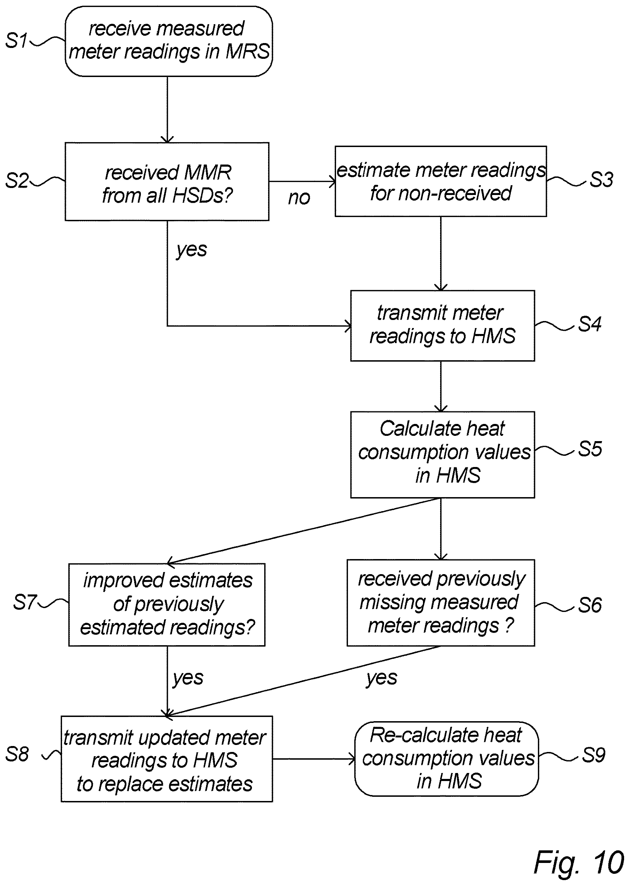

Fig. 10 shows a flow chart of an embodiment of the invention. The flow chart shows a number of method steps (S1-S9) for monitoring heat consumption values (HCV) of a plurality of heat submetering devices (HSD). In the first step (S1) the meter reading system (MRS) receives measured meter readings (MMR) for a common monitoring period (MP) from a number of heat submetering devices (HSD) associated with a common heat supply (CHS). By a common monitoring period (MP) is understood that the measured meter readings correlate substantially in time, i.e. the measured meter readings from the plurality of heat submetering devices may be recorded at various points in time and are therefore distributed within a given time period. As an example, a measured meter reading may have been recorded in the middle of the monitoring period, and still be representative of that time period, although the time period extends beyond the time of recording, also referred to as the reading time (RT). The distribution over time of the reading times of measured meter readings (MMR) may arise due to different configurations of the heat submetering devices (HSD). Some devices may be able to record measured meter readings more often than others, and the devices may further be out of phase with each other, thus leading to measured meter readings (MMR) having reading times (RT) that are different for a given monitoring period (MP), i.e. the common monitoring period.

For many reasons, it may turn out that measured meter readings for some heat submetering devices (HSD) are missing in the meter reading system (MRS) for the common monitoring period (MP) although they were planned to be acquired. This may be due to errors in the communication link between the heat submetering devices (HSD) and the meter reading system (MRS). Alternatively, the error may be due to faulty heat submetering devices (HSD). Therefore, a distinction is made between heat submetering devices (HSD) belonging to a received devices group and a non-received devices group. The received devices group comprises the heat submetering devices (HSD) from which measured meter readings (MMR) are received in the meter reading system (MRS) for the common monitoring period (MP) in the step (S1), as opposed to the non-received devices group comprising heat submetering devices (HSD) from which measured meter readings (MMR) are not received in the meter reading system (MRS) for the common monitoring period (MP) at the step (S1). The status of being in the non-received devices group may be temporary, so because a heat submetering device (HSD) belongs to the non-received devices group it does not exclude it from sending or resending a measured meter reading (MMR) for that common monitoring period (MP) at a later time.

The meter reading system (MRS) may in a next step (S2) determine whether or not measured meter readings (MMR) are received from all expected heat submetering devices (HSD). If the meter reading system (MRS) receives meter readings from all of the plurality of heat submetering devices (HSD), the system may in a step (S4) transmit meter readings (MR) associated with all heat submetering devices (HSD) for the common monitoring period (MP) to the heat monitoring system (HMS). These meter readings (MR) may comprise representations of the measured meter readings (MMR) received in the step (S1).

In the case that measured meter readings (MMR) corresponding to the monitoring period (MP) are not received for one or more of the heat submetering devices (HSD), estimates of these measured meter readings (MMR) have to be established in order to carry out a calculation of heat consumption values (HCV), which requires meter readings (MR) of all the heat submetering devices (HSD) associated with the monitoring period (MP). These estimates, which are established in the step (S3), are also referred to as estimated meter readings (EMR) and transmitted to the heat monitoring system (HSM) in step (S4) together with the measured meter readings (MMR) that were received for the monitoring period (MP).

In the example of Fig. 10 the estimated meter readings (EMR) are produced by the meter reading system (MRS) and thus transmitted as part of the meter readings (MR) from the meter reading system (MRS) to the heat monitoring system (HMS) in step (S4). In another embodiment the heat monitoring system (HMS) may be in charge of producing estimated meter readings (EMR) for the non-received devices group of heat submetering devices (HSD). If the estimated meter readings (EMR) are produced by the meter reading system (MRS), the meter reading system (MRS) is arranged to transmit meter readings (MR) comprising the representation of measured meter readings (MMR) received in the step (S1) as well as the estimated meter readings (EMR). These meter readings (MR) are transmitted to the heat monitoring system (HMS) in the step (S4). In the case where the estimated meter readings (EMR) are produced by the heat monitoring system (HMS), the step (S3) appears after step (S4).

Once the heat monitoring system (HMS) has meter readings associated with the monitoring period (MP) for all heat submetering devices (HSD), the heat monitoring system (HMS) is in a position to calculate heat consumption values (HCV) for the heat consumption arrangements (HCA). This calculation is performed in the step (S5) on the basis of the transmitted meter readings (MR). The calculation is further based on the energy consumption (EC) associated with the common heat supply (CHS) as described in more detail below.

To demonstrate a calculation of heat consumption values (HCV) is here given an example using the six heat submetering devices (HSD) comprised by the building (B) illustrated in Fig. 1. The six heat submetering devices (HSD) are labelled by HSD#1-HSD#6. The first two heat submetering devices (HSD#1-HSD#2) are comprised by a first heat consumption arrangement (HCA), the third and fourth heat submetering devices (HSD#3-HSD#4) are comprised by a second heat consumption arrangement (HCA), and the last two heat submetering devices (HSD#5-HSD#6) are comprised by their own respective heat consumption arrangements (HCA). The example shows a general approach to calculating heat consumption values (HCV) based on a comparison of meter readings (MR) associated with the same monitoring period (MP) but having different reading times (RT), i.e. they are not recorded at the exact same time. In this example the calculation of heat consumption values (HCV) corresponding to a second monitoring period (MP2) for the four heat consumption arrangements (HCA) is done by comparing meter readings associated with the second monitoring period (MP2) to meter readings (MR) corresponding to the previous, first monitoring period (MP1). In this example, the meter readings (MR) may comprise reading times (RT) within their corresponding monitoring periods (MP), for example in the end of the monitoring periods (MP), such that any difference between two meter readings (MR) corresponding to the same heat submetering device (HSD) and corresponding to the two monitoring periods (MP1, MP2) may substantially reflect the heat consumption of the second monitoring period (MP2). The monitoring periods (MP1, MP2) in this example may be 24 hours.

Meter readings (MR) corresponding to the six heat submetering devices and corresponding to the first monitoring period (MP1) are shown in the second column of Table 1, below, labelled MR_{MP1}. Likewise, meter readings (MR) for the same heat submetering devices corresponding to the second monitoring period (MP2) are shown in the second column labelled MP_{MP2}. Two of the meter readings (MR) corresponding to the second monitoring period (MP2) are estimated meter readings (EMR) and these have been highlighted by an asterisk sign, i.e. the meter readings corresponding to the second and fifth heat submetering devices (HSD#2, HSD#5). The other meter readings are measured meter readings (MMR) received from the heat submetering devices (HSD).

By subtracting the meter readings (MR) of the first monitoring period (MP1) from the meter readings (MR) of the second monitoring period (MP2) the changes in meter readings (MR) from the first monitoring period (MP1) to the second monitoring period (MP2) are calculated. These changes are found in the fourth column labelled MR_{MP2-MP1}. These changes reflect units of heat consumed by the corresponding six heat consumption devices over the duration of the second monitoring period (MP2). As indicated in the table, the total heat consumption corresponding to the six heat consumption devices amounts to 17.1 units of heat. However, the typical heat submetering devices (HSD) do not measure absolute heat, but simply record representations of heat consumption referred to above as units of heat. To map these units to actual heat, the total heat consumption of the building, as well as the total of units of heat has to be known or estimated.

In this example, the total energy consumption (EC) of the building (B) as for example measured by a main meter of the common heat supply (CHS) consumed during the second monitoring period (MP2) is 143 kWh, i.e. 143 kilowatt-hours.

**Table 1.**

| HSD# | MR_{MP1} | MR_{MP2} | MR_{MP2-MP1} | HCV_{HSD} [kWh] | HCV_{HCA} [kWh] |
|---|---|---|---|---|---|
| 1 | 37.2 | 42.4 | 5.1 | 42.6 | 61.8 |
| 2 | 19.6 | 21.9* | 2.3 | 19.2 | |
| 3 | 18.9 | 20.8 | 1.9 | 15.9 | 45.2 |
| 4 | 24.1 | 27.6 | 3.5 | 29.3 | |
| 5 | 29.7 | 31.2* | 1.5 | 12.5 | 12.5 |
| 6 | 12.6 | 15.5 | 2.8 | 23.4 | 23.4 |
| | | **Total:** | **17.1** | **143** | **143** |

Knowing the individual heat submetering devices' measured share of the total heat consumption of 17.1 units of heat, it is possible to calculate the heat consumption values (HCV) corresponding to the heat submetering devices (HCV). For example, over 24 hours the first heat submetering device (HSD#1) has measured a consumption of 5.1 units of heat, which amounts to about 29.8 percent of the sum of units of heat of 17.1. Thereby the first heat submetering device (HSD#1) also accounts for the same about 29.8 percent of the total heat consumption, i.e. 29.8 percent of 143 kWh which amounts to 42.6 kWh. Heat consumption values (HCV), in units of kilowatt hours, corresponding to all of the heat submetering devices (HSD#1-HSD#6) can thus be calculated and are shown in column 5 labelled HCV_{HSD}. By knowing which heat submetering devices (HSD#1-HSD#6) belongs to which heat consumption arrangements (HCA), it is possible to calculate total heat consumption values (HCV) for the four individual heat consumption arrangements (HCA) of the building (B). These values are shown in the sixth column labelled HCV_{HCA}.

Since Table 1 represents heat consumption values (HCV) that are based on estimated meter readings (EMR), the values can only be approximations of actual heat consumptions. The values are thus prone to improvements by use of updated estimated meter readings (UEMR) or by use of the actual measured meter readings (MMR) which the estimated meter readings (EMR) were substitutes for.

This possibility is shown in the later steps of Fig. 10. In step (S6), measured meter readings (MMR) of heat submetering devices of the non-received devices group that were not previously received in the meter reading system (MRS) in the first step (S1) and for which estimated meter readings (EMR) where therefore generated for the calculation of heat consumption values (HCV), may become available if the non-received statues of the heat submetering was merely of temporary nature or the measured meter readings may be obtained in a different manner. These readings may be transmitted from the heat submetering devices (HSD) of the non-received devices group of heat submetering devices (HSD) or be provided to the meter reading system (MRS) via an external system different from the meter reading system (MRS) and the heat monitoring system (HMS), for example by manual reading of the display of the heat submetering device. The new knowledge of actual readings for a previous monitoring period instead of estimates may be used to improve the calculation of heat consumption among the heat consumption arrangements in that previous monitoring period and/or be used to produce better estimates for future non-received devices.

Further, as seen in step (S7), it may be possible to generate new, improved estimates to substitute previously estimated meter readings (EMR). This may for example occur when the monitoring period is very short, for example in terms of seconds or minutes, and a fast estimate then have to be provided immediately for non-received devices, but a slower, more elaborate or based on different data, updated estimated meter reading (UEMR) may be generated with more time or after other data becomes available. If estimates are based on measured readings from other heat submetering devices, for example neighbouring devices, the estimates may have to be re-estimated if real measured data becomes available for neighbours that were previously estimated. The updated estimates for an earlier monitoring period may be used to improve the calculation of that monitoring period or as basis for future estimates.

Hence, updated meter readings (UMR) for the same monitoring period as previously transmitted meter readings (MR) may occur in the meter reading system comprising either measured meter readings (MMR) or updated estimated meter readings (UEMR) for previously estimated heat submetering devices (HSD).

In step (S8), the meter reading system (MRS) transmits updated meter readings (UMR), comprising the measured meter readings (MMR) of step (S6) and/or updated estimated meter readings (UEMR) of step (S7), to the heat monitoring system (HMS). Preferably, only updated meter readings are transmitted in step (S8). Non-updated meter readings for the monitoring period were already transmitted at step (S4).

In a following step (S9), the heat monitoring system (HMS) calculates new heat consumption values (HCV) on the basis of the meter readings (MR) transmitted at the step (S4) and the updated meter readings (UMR) transmitted at the step (S8).

Continuing the above example of calculations of heat consumption values (HCV), the updated meter readings (UMR), comprising measured meter readings (MMR) received at the later point in time, for devices for which estimated meter readings (EMR) were used in Table 1. Table 2 below shows the new meter readings (MR), where the meter readings corresponding to the second and fifth heat submetering devices (HSD#2, HSD#5) are updated, i.e. 23.1 replaces 21.9 and 31.9 replaces 31.2. In this example, both estimates turned out to be lower than the real values. The update of meter readings results in a new total heat consumption of 19 units of heat, as measured by the six heat submetering devices (HSD#1-HSD#6). The total energy consumption (EC) of the building is still 143 kWh in this example. It is important to note, that the updated meter readings (MR_{MP1}) for two out of six devices affect the previously calculated heat consumption values (HCV), and not only the heat consumption values corresponding to the second and fifth heat submetering devices, but also all other devices.

**Table 2.**

| HSD# | MR_{MP0} | MR_{MP1} | MR_{MP1-MP0} | HCV_{HSD} [kWh] | HCV_{HCA} [kWh] |
|---|---|---|---|---|---|
| 1 | 37.2 | 42.4 | 5.1 | 38.4 | 64.7 |
| 2 | 19.6 | 23.1 | 3.5 | 26.3 | |
| 3 | 18.9 | 20.8 | 1.9 | 14.3 | 40.6 |
| 4 | 24.1 | 27.6 | 3.5 | 26.3 | |
| 5 | 29.7 | 31.9 | 2.2 | 16.6 | 16.6 |
| 6 | 12.6 | 15.5 | 2.8 | 21.1 | 21.1 |
| | | **Total:** | **19.0** | **143** | **143** |

In a large building (B) comprising many heat consumption arrangements (HCA), and thereby many heat submetering devices (HSD), it may be necessary to use many more estimated meter readings (EMR), and the corresponding measured meter readings (MMR) may arrive in the meter reading system (MRS) over the course of a period greater than one or more monitoring periods (MP).

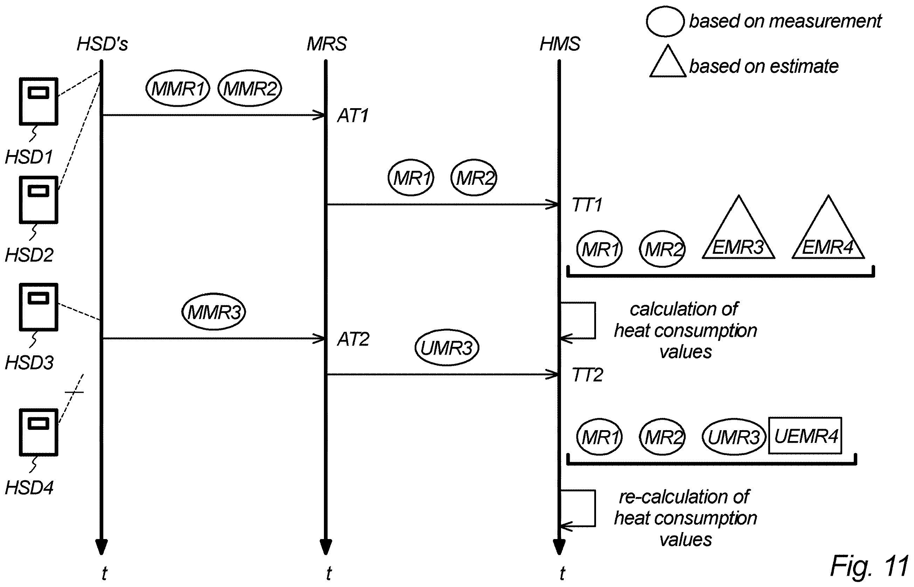

Fig. 11 shows an embodiment of the invention. Specifically, fig. 11 shows an example of the timing of a heat monitoring method from the perspective of the heat submetering devices (HSD), the meter reading system (MRS) and the heat monitoring system (HMS). The drawing shows four heat submetering devices (HSD1-HSD4) that are associated with heat consumption devices (HCD) supplied by a common heat supply (CHS). The meter reading system (MRS) receives two measured meter readings (MMR1-MMR2) corresponding to the first and second heat submetering devices (HSD1-HSD2) at a first acquisition time (AT1). The measured meter readings (MMR1-MMR2) are associated with a common monitoring period (MP). Ideally, the meter reading system (MRS) would also receive measured meter readings (MMR) associated with the same monitoring period (MP) corresponding to the other two heat submetering devices (HSD3-HSD4), however, for some reasons, measured meter readings (MMR) pertaining to these devices are not received in the meter reading system (MRS) at the first acquisition time (AT1). Thus, the third and fourth heat submetering devices (HSD3-HSD4) are associated with the non-received devices group. The first acquisition time (AT1) may be understood as a time interval over which the measured meter readings (MMR) corresponding to heat submetering devices (HSD) of the received devices group are received in the meter reading system (MRS).

Once acquired in the meter reading system (MRS) the measured meter readings may be processed by the system to produce meter readings (MR). Since only two measured meter readings (MMR1-MMR2) were received at the first acquisition time, the meter reading system only produces two corresponding meter readings (MR1-MR2), which are transmitted to the heat monitoring system (HMS) at a first transmission time (TT1). The first transmission time (TT1) may be understood as a time interval over which the meter readings (MR) are transmitted to the heat monitoring system (HMS).

After the first transmission time (TT1), the heat monitoring system (HMS) may calculate heat consumption values (HCV) corresponding to heat consumption arrangements (HCA) wherein the heat submetering devices (HSD) are located. In this example, the calculation is based on the two transmitted meter readings (MR1-MR2) and, since meter readings (MR) corresponding to the third and fourth heat submetering devices (HSD3-HSD4), associated with the same monitoring period (MP), are not present, the heat monitoring system (HMS) may have to use estimated meter readings (EMR3-EMR4) for these.

At a second acquisition time (AT2), after the first acquisition time (AT1) and after the first transmission time (TT1), the meter reading system (MRS) receives the measured meter reading (MMR3), associated with the same monitoring period, from the third heat submetering device (HSD3). This measured meter reading is represented by an updated meter reading (UMR3) and transmitted to the heat monitoring system (HMS) at a second transmission time (TT2). Likewise, the second transmission time may be understood as a time interval over which updated meter readings (UMR) are transmitted to the heat monitoring system (HMS).

For some reason, the measured meter reading corresponding to the fourth heat submetering device (HSD) is never received in the meter reading system (MRS). Such a scenario could be explained by the heat submetering device (HSD4) being battery-powered and the battery has run out, or due to the device being defective in any other way. Lastly, it could also be due to an error in the transmission of the reading to the meter reading system (MRS).

In light of the new transmitted updated meter reading (UMR3) the heat monitoring system (HMS) may re-calculate the previously calculated heat consumption values (HCV). This calculation is thus based on the two meter readings (MR1-MR2) transmitted at the first transmission time (TT1), the updated meter reading (UMR3) transmitted at the second transmission time (TT2) and now replacing the previous estimated meter reading (EMR3), and an estimate for the fourth heat submetering device (HSD4). This last estimate may be the estimated meter reading (EMR4) used before, or as shown in the figure, an updated estimated meter reading (UEMR4). Following an update/replacement of a reading as shown in this figure, it is likely that a better estimate, i.e. an updated estimated meter reading (UEMR), may be produced, since such an estimate may depend on other readings that have been updated. In this embodiment, the estimated meter readings (EMR) and the updated estimated meter readings are produced in the heat monitoring system (HMS).

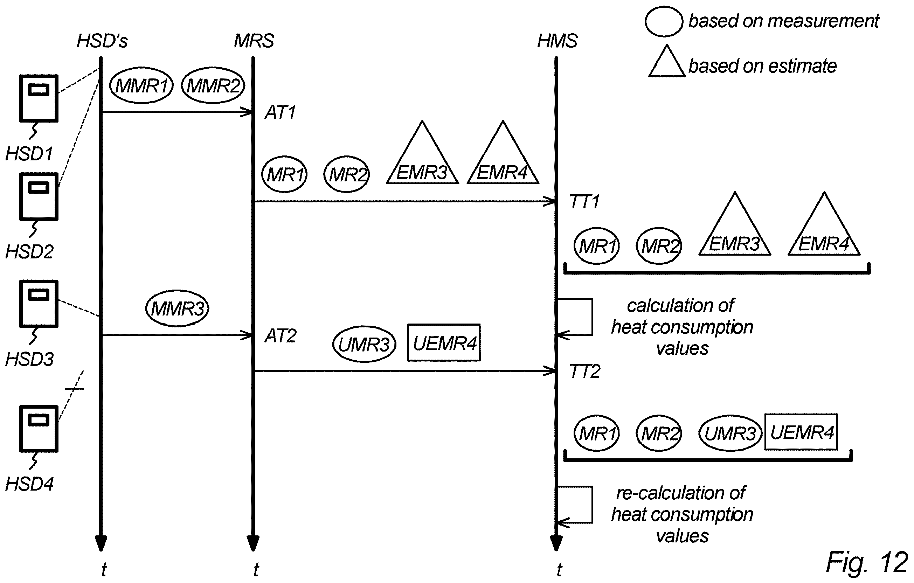

Fig. 12 shows another embodiment which is a variation of the embodiment shown in fig. 11. In this embodiment, the role of producing estimated meter readings (EMR) and updated estimated meter readings (UEMR) is assigned to the meter reading system (MRS). In this case, the meter reading system (MRS) may transmit the estimated meter readings (EMR3-EMR4) along with the meter readings (MR1-MR2) in the first transmission, and the updated estimated meter reading (UEMR4) along with the updated meter reading (UMR3) in the second transmission.

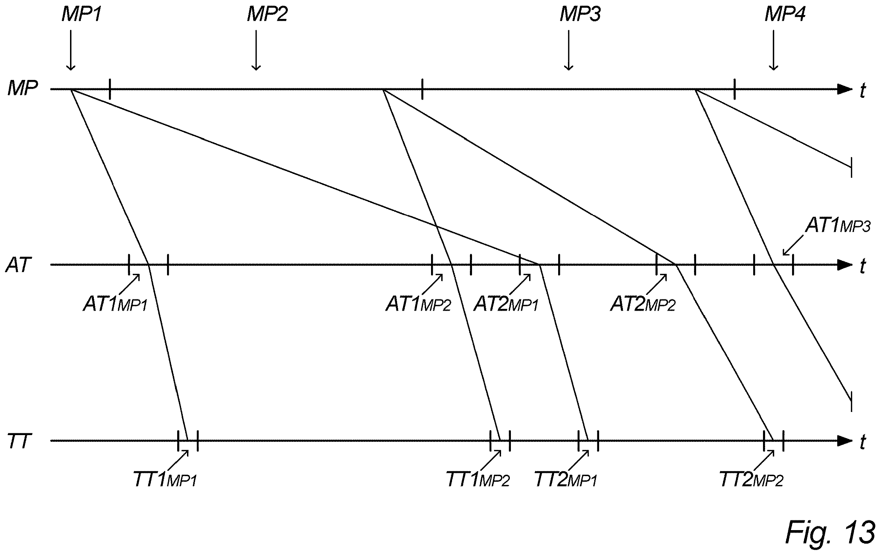

Fig. 13 shows an example over longer time, including multiple monitoring periods (MP1-MP4), and acquisition times and transmission times corresponding to these monitoring periods. Measured meter readings (MMR) associated with the first monitoring period (MP1) may be received in the meter reading system (MRS) at a first acquisition time (AT1_{MP1}) and at a second acquisition time (AT2_{MP1}) later than the first acquisition time. Likewise, measured meter readings (MMR) corresponding to a second monitoring period (MP2) may be acquired at first and second acquisition times (AT1_{MP2}, AT2_{MP2}), and similarly for following monitoring periods (MP3, MP4, ...). The ordering of the acquisition times may not necessarily be according to the chronological ordering of the monitoring periods (MP), as illustrated by the first acquisition time (AT1_{MP2}) of the second monitoring period (MP2) being the next acquisition in the meter reading system (MRS) after the first acquisition time (AT1_{MP1}) of the first monitoring period (MP1). The drawing shows that all acquisition times may be understood as time intervals of finite lengths. The lengths of the acquisition time intervals may not necessarily be identical.

Subsequent to each acquisition is a corresponding transmission of meter readings (MR) or updated meter readings (UMR). The readings acquired at the first transmission time (AT1_{MP1}) and corresponding to the first monitoring period are transmitted at the corresponding first transmission time (TT1_{MP1}). The readings acquired at the second acquisition time (AT2_{MP1}) and corresponding to the first monitoring period (MP1) are transmitted at the corresponding second transmission time (TT2_{MP1}). The same applies for all other acquisition times. As seen in the figure the transmission times may be understood as time intervals of finite length. The lengths of the transmission time intervals may not necessarily be identical, and they may be shorter than the acquisition time intervals. The time intervals of the acquisition times (AT) may in an embodiment simply be defined by the transmission times (TT), so that an acquisition time for a certain monitoring period starts when the first measured meter reading associated with the monitoring period arrives, and the first acquisition time ends when it is time to transmit the so-far received measured meter readings to the heat monitoring system at the first transmission time. Anything received after this but associated with the same monitoring period is considered received at the second (or further) acquisition time.

The transmission times may for example be pre-determined times relative to monitoring periods at which the heat monitoring system requires to receive meter readings in order to be able to calculate heat consumption value for the monitoring periods. For example, the heat monitoring system may be required to calculate heat consumption values for a certain monitoring period no later than 2 hours into the next monitoring period, and should therefore receive meter readings, being measured or estimated, for all heat submetering devices in time to meet this requirement for the calculation time. This, in turn, may require the first transmission time to be no later than 1 hour into the next monitoring period. Measured meter readings that are received later, or estimates that can be improved with more time, can then be transmitted at a second transmission time, and lead to recalculation of the heat consumption values.

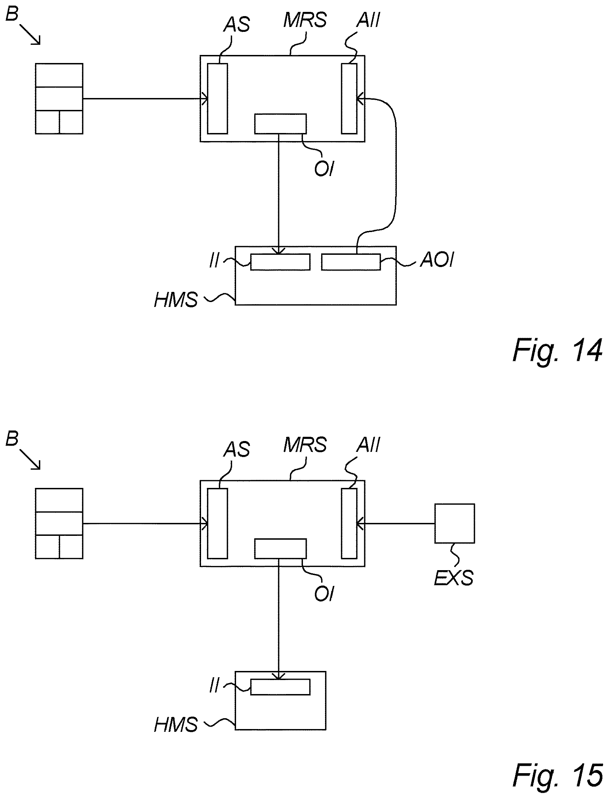

Fig. 14 shows an embodiment of the invention in which the meter reading system (MRS) comprises, in addition to an acquisition system (AS) and an output interface (OI), an auxiliary input interface (AII) arranged to receive auxiliary meter readings (AMR). In this embodiment, the heat monitoring system (HMS) comprises, in addition to an input interface (II), an auxiliary output interface (AOI) arranged to transmit auxiliary meter readings (AMR) to the auxiliary input interface (AII) of the meter reading system (MRS).

The auxiliary meter readings (AMR) may comprise any of the following; measured meter readings (MMR), estimated meter readings (EMR), and updated estimated meter readings (UEMR). As an example, auxiliary meter readings (AMR) may represent measured meter readings (MMR) that are read off the heat submetering devices (HSD) manually, and therefore not automatically transmitted to the meter reading system (MRS) via the acquisition system (AS). Such a manual reading of measured meter reading (MMR) may be facilitated by a display located on the heat submetering device (HSD) and may for some reason more conveniently be received in the heat monitoring system (HMS) than directly in the meter reading system (MRS). For example, the person performing the manual reading may be a user of the heat monitoring system (HMS) and wondering about the calculated heat consumption values. Obtaining manual readings of measured meter readings (MMR) may also be relevant if for example a heat submetering device is subject to systematic errors in its transmission, i.e. the device transmits readings that are systematically greater than the actual readings which may be read off on the display. Need of manual readings of meter readings may also be necessary for heat submetering devices (HSD) that for some reason cannot establish a connection with the meter reading system (MRS) but are still capable of generating measured meter readings (MMR). In this embodiment, the auxiliary meter readings (AMR) may be transmitted from the heat monitoring system (HMS) by a user associated with the heat monitoring system (HMS).

In an embodiment where the heat monitoring system (HSM) is generating estimated meter readings (EMR), the auxiliary meter readings (AMR) may be used to synchronize the meter reading system (MRS) with the estimates generated by the heat monitoring system (HSM).

The auxiliary output interface (AOI) of the heat monitoring system (HMS) and the auxiliary input interface (AII) of the meter reading system (MRS) may also be able to exchange other types of data, such as error reports pertaining to previously transmitted meter readings (MR) and/or updated meter readings (UMR) transmitted from the meter reading system (MRS) to the heat monitoring system (HMS). In this sense, the auxiliary output interface (AOI) and the auxiliary input interface (AII) may be seen as a feedback channel from the heat monitoring system (HMS) to the meter reading system (MRS).

Fig. 15 shows another embodiment of the invention where the meter reading system (MRS) comprises an auxiliary input interface (AII). Compared to the embodiment of Fig. 14, the interface is in the embodiment of Fig. 15 arranged to receive auxiliary meter readings (AMR) as described above, or other auxiliary data types as described above, from an external system (EXS) different from both the meter reading system (MRS) and the heat monitoring system (HMS). Thereby the meter reading system (MRS) may be able to receive manual read measured meter readings from other channels than the heat monitoring system or receive automatically acquired meter readings from other system not compatible with the acquisition system (AS).

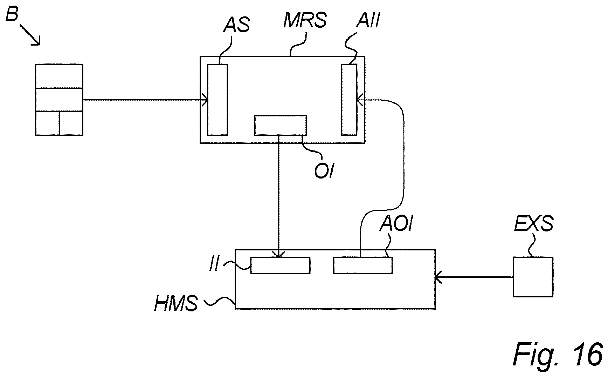

Fig. 16 shows an embodiment of the invention which is an alternative to the embodiment shown on fig. 15. In this embodiment, the external system (EXS) is still arranged to transmit auxiliary meter readings (AMR) or other types of auxiliary data, however the transmission is to the heat monitoring system (HMS) which may be arranged to transmit these to the meter reading system (MRS) via an auxiliary channel comprising an auxiliary output interface (AOI) and an auxiliary input interface (AII).

The embodiments of Figs. 14-16 may be combined, so that several of these channels for auxiliary meter readings and other data are implemented at the same time, for example to allow the meter reading system to receive auxiliary data from both the heat monitoring system and an external system.

### List of reference signs:

- AII: Auxiliary input interface
- AMR: Auxiliary meter readings
- AOI: Auxiliary output interface
- AS: Acquisition system
- AT1: First acquisition time
- AT2: Second acquisition time
- B: Building
- BR: Batch receipt
- BQ: Batch queue
- CHS: Common heat supply
- EC: Energy consumption
- EMR: Estimated meter reading
- EXS: External system
- HCA: Heat consumption arrangement
- HCV: Heat consumption value
- HMS: Heat monitoring system
- HSD: Heat submetering device
- II: Input interface
- MM: Main meter
- MMR: Measured meter reading
- MP: Monitoring period
- MP1: First monitoring period
- MP2: Second monitoring period
- MR: Meter reading
- MRS: Meter reading system
- OI: Output interface
- PL: Priority label
- RT: Reading time
- TB: Transmission batch
- TT1: First transmission time
- TT2: Second transmission time
- UEMR: Updated estimated meter reading
- UMR: Updated meter reading
- VR: Validation response

## Claims

1. A method of monitoring heat consumption using a plurality of heat submetering devices (HSD) distributed in a plurality of individual heat consumption arrangements (HCA) supplied with a heating medium by a common heat supply (CHS), said plurality of heat submetering devices (HSD) being communicatively associated with a meter reading system (MRS), the method comprising:
receiving in said meter reading system (MRS) measured meter readings (MMR), each corresponding to a respective heat submetering device (HSD) of a received devices group of said plurality of heat submetering devices (HSD);
transmitting meter readings (MR) to a heat monitoring system (HMS), at least one of said meter readings (MR) comprising a representation of one of said received measured meter readings (MMR), said transmitting comprising:
allocating said meter readings (MR) to transmission batches (TB) and for each of said transmission batches (TB):
transmitting said transmission batch (TB) to said heat monitoring system (HMS);
placing said transmitted transmission batch (TB) in a batch queue (BQ) of said heat monitoring system (HMS);
receiving in said meter reading system (MRS) from said heat monitoring system (HMS) a batch receipt (BR) for said transmitted transmission batch (TB);
validating in said heat monitoring system (HMS) said transmission batches (TB) of said batch queue (BQ);
calculating in said heat monitoring system (HMS) heat consumption values (HCV) corresponding to one or more of said plurality of heat consumption arrangements (HCA) for monitoring periods (MP), for each monitoring period (MP) the calculating comprising:
providing an energy consumption (EC) derived from said common heat supply (CHS) and being associated with said monitoring period (MP);
selecting meter readings (MR) corresponding to each of said plurality of heat submetering devices (HSD), and being associated with said monitoring period (MP);
wherein said selected meter readings (MR) comprise estimated meter readings (EMR) corresponding to heat submetering devices (HSD) of a non-received devices group of said plurality of heat submetering devices (HSD) and said at least one of said meter readings (MR) comprising said representation of one of said measured meter readings (MMR).

2. The method according to claim 1 wherein said transmitting meter readings (MR) comprises the meter reading system (MRS) transmitting said transmission batches (TB) to a service exposed by said heat monitoring system (HMS).

3. The method according to any of the preceding claims wherein at least one of said allocated meter readings (MR) comprises an estimated meter reading (EMR) corresponding to a heat submetering device (HSD) of a non-received devices group of said plurality of heat submetering devices (HSD).

4. The method according to any of the preceding claims wherein at least one of said allocated meter readings (MR) comprises an updated meter reading (UMR) corresponding to one of said plurality of heat submetering devices (HSD).

5. The method according to any of the preceding claims wherein said batch receipt (BR) comprises a unique identifier and/or a status code, such as wherein the only information in said batch receipt (BR) is said unique identifier.

6. The method according to any of the preceding claims wherein said meter reading system (MRS) after transmitting said transmission batch (TB) awaits the receipt of said batch receipt (BR) before proceeding with transmitting a further transmission batch.

7. The method according to any of the preceding claims wherein said validating said transmission batches (TB) comprises after validating a transmission batch (TB) generating and transmitting a validation response (VR) from said heat monitoring system (HMS) to said meter reading system (MRS), for example wherein said heat monitoring system (HMS) transmits said validation response (VR) to said meter reading system (MRS) upon a validation request from said meter reading system (MRS) wherein said validation request from said meter reading system comprises a reference to the respective batch receipt (BR) of said transmission batch (TB) that was validated, such as a unique identifier comprised by said batch receipt (BR).

8. The method according to any of the preceding claims wherein each meter reading (MR) comprises a reading time (RT), and said association of meter readings (MR) with said monitoring period (MP) is based on said reading time (RT).

9. The method according to any of the preceding claims wherein said selecting meter readings (MR) comprises providing an estimated meter reading (EMR) for any of said plurality of heat submetering devices (HSD) for which no meter reading (MR) associated with said monitoring period (MP) is found in said memory of said heat monitoring system (HMS).

10. The method according to any of the preceding claims wherein said transmission batches (TB) comprise a priority label (PL) associated with a priority level, and wherein said placing of said transmission batches (TB) in said batch queue (BQ) is performed on the basis of said priority level.

11. The method according to any of the preceding claims wherein said calculating heat consumption values (HCV) for a monitoring period (MP) is repeated as a re-calculation for the same monitoring period (MP), the re-calculation being triggered by meter readings (MR) associated with said same monitoring period (MP) being received via said transmission batches (TB) in the heat monitoring system (HMS).

12. The method according to any of the preceding claims wherein the time of said receiving measured meter readings associated with a monitoring period (MP) is a first acquisition time (AT1) of said monitoring period (MP1) and the time of said transmitting a transmission batch (TB) comprising meter readings (MR) associated with said monitoring period (MP) is a first transmission time (TT1) of said monitoring period (MP);
wherein the method comprises a step of providing in said meter reading system (MRS) at a second acquisition time (AT2) of said monitoring period (MP) after said first transmission (TT1) one or more meter readings (MR) associated with said monitoring period (MP) and corresponding to one or more heat submetering devices (HSD) of said non-received devices group;
wherein the method comprises a step of transmitting one or more updated meter readings (UMR) to said heat monitoring system (HMS) at a second transmission time (TT2) of said monitoring period (MP) later than said first transmission time (TT1), wherein each updated meter reading (UMR) comprises one of said one or more meter readings (MR) provided in said meter reading system (MRS) at said second acquisition time (AT2) of said monitoring period (MP); and
wherein the method comprises repeating said calculating as a re-calculating in said heat monitoring system (HMS) of heat consumption values (HCV) corresponding to one or more of said plurality of heat consumption arrangements (HCA) for a monitoring period (MP) for which said calculating has already been performed, the recalculating comprising:
providing said energy consumption (EC) derived from said common heat supply (CHS) and being associated with said monitoring period (MP);
selecting meter readings (MR) corresponding to each of said plurality of heat submetering devices (HSD), and being associated with said monitoring period (MP);
wherein said selected meter readings (MR) comprise meter readings transmitted at said first transmission time (TT1) of said monitoring period (MP) and said updated meter readings (UMR) transmitted at said second transmission time (TT2) of said monitoring period (MP).

13. A system for monitoring heat consumption in a plurality of individual heat consumption arrangements (HCA) supplied with a heating medium by a common heat supply (CHS), the system comprising:
a plurality of heat submetering devices (HSD) distributed in said plurality of individual heat consumption arrangements (HCA);
a meter reading system (MRS) communicatively coupled to said plurality of heat submetering devices (HSD);
a heat monitoring system (HMS) communicatively coupled to said meter reading system (MRS) and comprising a batch queue (BQ);
wherein a part of said plurality of heat submetering devices (HSD) belongs to a received devices group of said plurality of heat submetering devices (HSD) and the remaining part belongs to a non-received devices group of said plurality of heat submetering devices (HSD) for a monitoring period (MP);
wherein said meter reading system (MRS) is arranged to receive measured meter readings (MMR) each corresponding to a respective heat submetering device (HSD) of said received devices group of said plurality of heat submetering devices (HSD);
wherein said meter reading system (MRS) is further arranged to transmit meter readings (MR) to said heat monitoring system (HMS), at least one of said meter readings (MR) comprising a representation of one of said received measured meter readings (MMR), said transmitting being arranged to comprise:
allocating said meter readings (MR) to transmission batches (TB) and for each of said transmission batches (TB):
transmitting said transmission batch (TB) to said heat monitoring system (HMS);
placing said transmitted transmission batch (TB) in said batch queue (BQ) of said heat monitoring system (HMS);
receiving in said meter reading system (MRS) from said heat monitoring system (HMS) a batch receipt (BR) for said transmitted transmission batch (TB);
wherein said heat monitoring system (HMS) is arranged to validate said transmission batches (TB) of said batch queue (BQ), ;
wherein said heat monitoring system (HMS) is arranged to calculate heat consumption values (HCV) corresponding to one or more of said plurality of heat consumption arrangements (HCA) for said monitoring periods (MP), for each monitoring period (MP) the said calculating being arranged to comprise:
providing an energy consumption (EC) derived from said common heat supply (CHS) and being associated with said monitoring period (MP);
selecting meter readings (MR) corresponding to each of said plurality of heat submetering devices (HSD), and being associated with said monitoring period (MP);
wherein said selected meter readings (MR) comprise estimated meter readings (EMR) corresponding to heat submetering devices (HSD) of said non-received devices group of said plurality of heat submetering devices (HSD) and said at least one of said meter readings (MR) comprising said representation of one of said measured meter readings (MMR).

14. The system for monitoring heat consumption of claim 13 wherein said system for monitoring heat consumption is further arranged to carry out the method according to any of the claims 1-12 or said system for monitoring heat consumption includes any of the system features of any of the claims 1-12.

## Patentansprüche

1. Verfahren zur Wärmeverbrauch-Überwachung unter Verwendung mehrerer Wärme-Submetering-Vorrichtungen (HSD), die in mehreren einzelnen Wärmeverbrauchseinrichtungen (HCA) verteilt sind, die durch eine gemeinsame Wärmeversorgung (CHS) mit einem Heizmedium versorgt werden, wobei die mehreren Wärme-Submetering-Vorrichtungen (HSD) mit einem Verbrauchszählerablesesystem (MRS) kommunikativ verbunden sind, wobei das Verfahren Folgendes umfasst:
Empfangen, in dem Verbrauchszählerablesesystem (MRS), von gemessenen Verbrauchszählerablesungen (MMR), von denen jede einer zugehörigen Wärme-Submetering-Vorrichtung (HSD) einer Gruppe von empfangenen Vorrichtungen von den mehreren Wärme-Submetering-Vorrichtungen (HSD) zugeordnet ist;
Übertragen von Verbrauchszählerablesungen (MR) an ein Wärmeüberwachungssystem (HMS), wobei wenigstens eine der Verbrauchszählerablesungen (MR) eine Repräsentation einer der empfangenen gemessenen Verbrauchszählerablesungen (MMR) umfasst, wobei das Übertragen Folgendes umfasst:
Zuordnen der Verbrauchszählerablesungen (MR) zu Übertragungsbündeln (TB) und für jedes dieser Übertragungsbündel (TB):
Übertragen des Übertragungsbündels (TB) an das Wärmeüberwachungssystem (HMS);
Einstellen des übertragenen Übertragungsbündels (TB) in eine Bündelwarteschlange (BQ) des Wärmeüberwachungssystems (HMS);
Empfangen, in dem Verbrauchszählerablesesystem (MRS) und von dem Wärmeüberwachungssystem (HMS), einer Bündelquittung (BR) für das übertragene Übertragungsbündel (TB);
Validieren, in dem Wärmeüberwachungssystem (HMS), der Übertragungsbündel (TB) aus der Bündelwarteschlange (BQ);
Berechnen, in dem Wärmeüberwachungssystem (HMS), von Wärmeverbrauchswerten (HCV), die für Überwachungszeiträumen (MP) zu einer oder mehreren der mehreren Wärmeverbrauchseinrichtungen (HCA) gehören, wobei für jeden Überwachungszeitraum (MP) die Berechnung Folgendes umfasst:
Bereitstellen eines Energieverbrauchs (EC), der von der gemeinsamen Wärmeversorgung (CHS) stammt und der dem Überwachungszeitraum (MP) zugeordnet ist;
Auswählen von Verbrauchszählerablesungen (MR), die jeder der mehreren Wärme-Submetering-Vorrichtungen (HSD) zugeordnet sind und die dem Überwachungszeitraum (MP) zugeordnet sind;
wobei die ausgewählten Verbrauchszählerablesungen (MR) geschätzte Verbrauchszählerablesungen (EMR) umfassen, die Wärme-Submetering-Vorrichtungen (HSD) aus einer Gruppe von nicht empfangenen Vorrichtungen von den mehreren Wärme-Submetering-Vorrichtungen (HSD) entsprechen, und wobei die wenigstens eine von den Verbrauchszählerablesungen (MR) die Repräsentation von einer der gemessenen Verbrauchszählerablesungen (MMR) umfasst.

2. Verfahren nach Anspruch 1, wobei das Übertragen von Verbrauchszählerablesungen (MR) das Übertragen der Übertragungsbündel (TB) durch das Verbrauchszählerablesesystem (MRS) an einen Dienst umfasst, der von dem Wärmeüberwachungssystem (HMS) angeboten wird.

3. Verfahren nach einem der vorhergehenden Ansprüche, wobei wenigstens eine der zugeordneten Verbrauchszählerablesungen (MR) eine geschätzte Verbrauchszählerablesung (EMR) umfasst, die einer Wärme-Submetering-Vorrichtung (HSD) aus einer Gruppe von nicht empfangenen Vorrichtungen von den mehreren Wärme-Submetering-Vorrichtungen (HSD) entspricht.

4. Verfahren nach einem der vorhergehenden Ansprüche, wobei wenigstens eine der zugeordneten Verbrauchszählerablesungen (MR) eine aktualisierte Verbrauchszählerablesung (UMR) umfasst, die einer der mehreren Wärme-Submetering-Vorrichtungen (HSD) entspricht.

5. Verfahren nach einem der vorhergehenden Ansprüche, wobei die Bündelquittung (BR) eine eindeutige Kennung und/oder Statuscode umfasst, wobei die einzige Information in der Bündelquittung (BR) die eindeutige Kennung sein kann.

6. Verfahren nach einem der vorhergehenden Ansprüche, wobei das Verbrauchszählerablesesystem (MRS) nach dem Übertragen des Übertragungsbündels (TB) auf den Empfang der Bündelquittung (BR) wartet, bevor es mit dem Übertragen eines weiteren Übertragungsbündels fortfährt.

7. Verfahren nach einem der vorhergehenden Ansprüche, wobei das Validieren der Übertragungsbündel (TB) nach dem Validieren eines Übertragungsbündels (TB) das Erzeugen und Übertragen einer Validierungsantwort (VR) vom Wärmeüberwachungssystem (HMS) an das Verbrauchszählerablesesystem (MRS) umfasst, wobei beispielsweise das Wärmeüberwachungssystem (HMS) die Validierungsantwort (VR) an das Verbrauchszählerablesesystem (MRS) aufgrund einer Validierungsanfrage vom Verbrauchszählerablesesystem (MRS) überträgt, und wobei die Validierungsanfrage vom Verbrauchszählerablesesystem einen Bezug auf die zugehörige Bündelquittung (BR) des Übertragungsbündels (TB), das validiert wurde, umfasst, wie etwa eine eindeutige Kennung, die in der Bündelquittung (BR) enthalten ist.

8. Verfahren nach einem der vorhergehenden Ansprüche, wobei jede Verbrauchszählerablesung (MR) einen Ablesezeitpunkt (RT) umfasst und wobei die Zuordnung von Verbrauchszählerablesungen (MR) zu den Überwachungszeiträumen (MP) auf den Ablesezeitpunkten (RT) basiert.

9. Verfahren nach einem der vorhergehenden Ansprüche, wobei das Auswählen von Verbrauchszählerablesungen (MR) das Bereitstellen einer geschätzten Verbrauchszählerablesung (EMR) für alle diejenigen von den mehreren Wärme-Submetering-Vorrichtungen (HSD) umfasst, für die keine Verbrauchszählerablesungen (MR), die dem Überwachungszeitraum (MP) zugeordnet sind, in dem Speicher des Wärmeüberwachungssystems (HMS) gefunden werden.

10. Verfahren nach einem der vorhergehenden Ansprüche, wobei die Übertragungsbündel (TB) einen Prioritätshinweis (PL) umfassen, der einer Prioritätsstufe zugeordnet ist, und wobei das Einstellen der Übertragungsbündel (TB) in die Bündelwarteschlange (BQ) basierend auf der Prioritätsstufe ausgeführt wird.

11. Verfahren nach einem der vorhergehenden Ansprüche, wobei das Berechnen der Wärmeverbrauchswerte (HCV) für einen Überwachungszeitraum (MP) als eine Neuberechnung für denselben Überwachungszeitraum (MP) wiederholt wird, wobei die Neuberechnung durch Verbrauchszählerablesungen (MR) ausgelöst wird, die demselben Überwachungszeitraum (MP) zugeordnet sind und die durch die Übertragungsbündel (TB) im Wärmeüberwachungssystem (HMS) empfangen werden.

12. Verfahren nach einem der vorhergehenden Ansprüche, wobei der Zeitpunkt für das Empfangen von gemessenen Verbrauchszählerablesungen, die einem Überwachungszeitraum (MP) zugeordnet sind, ein erster Erfassungszeitpunkt (AT1) des Überwachungszeitraums (MP1) ist und wobei der Zeitpunkt für das Übertragen eines Übertragungsbündels (TB), das Verbrauchszählerablesungen (MR) enthält, die dem Überwachungszeitraum (MP) zugeordnet sind, ein erster Übertragungszeitpunkt (TT1) des Überwachungszeitraums (MP) ist;
wobei das Verfahren einen Schritt umfasst, um in dem Verbrauchszählerablesesystem (MRS) zu einem zweiten Erfassungszeitpunkt (AT2) des Überwachungszeitraums (MP), der nach der ersten Übertragung (TT1) liegt, eine oder mehrere Verbrauchszählerablesungen (MR) bereitzustellen, die dem Überwachungszeitraum (MP) zugeordnet sind und die einer oder mehreren Wärme-Submetering-Vorrichtungen (HSD) aus der Gruppe von nicht-empfangenen Vorrichtungen entsprechen;
wobei das Verfahren einen Schritt zum Übertragen einer oder mehrerer aktualisierter Verbrauchszählerablesungen (UMR) an das Wärmeüberwachungssystems (HMS) zu einem zweiten Übertragungszeitpunkt (TT2) des Überwachungszeitraums (MP), der nach dem ersten Übertragungszeitpunkt (TT1) liegt, umfasst, wobei jede aktualisierte Verbrauchszählerablesung (UMR) eine von der einen oder den mehreren Verbrauchszählerablesungen (MR) umfasst, die in dem Verbrauchszählerablesesystem (MRS) zu dem zweiten Erfassungszeitpunkt (AT2) des Überwachungszeitraums (MP) bereitgestellt werden; und
wobei das Verfahren das Wiederholen der Berechnung, als eine Neuberechnung in dem Wärmeüberwachungssystem (HMS), von Wärmeverbrauchswerten (HCV) umfasst, die einer oder mehreren der mehreren Wärmeverbrauchseinrichtungen (HCA) für einen Überwachungszeitraum (MP) entsprechen, für den diese Berechnung bereits ausgeführt wurde, wobei die Neuberechnung Folgendes umfasst:
Bereitstellen des Energieverbrauchs (EC), der von der gemeinsamen Wärmeversorgung (CHS) stammt und der dem Überwachungszeitraum (MP) zugeordnet ist;
Auswählen von Verbrauchszählerablesungen (MR), die jeder der mehreren Wärme-Submetering-Vorrichtungen (HSD) entsprechen und die dem Überwachungszeitraum (MP) zugeordnet sind;
wobei die ausgewählten Verbrauchszählerablesungen (MR) Verbrauchszählerablesungen umfassen, die zu dem ersten Übertragungszeitpunkt (TT1) des Überwachungszeitraums (MP) übertragen wurden, sowie die aktualisierten Verbrauchszählerablesungen (UMR), die zu dem zweiten Übertragungszeitpunkt (TT2) des Überwachungszeitraums (MP) übertragen wurden.

13. System zum Überwachen des Wärmeverbrauchs in mehreren einzelnen Wärmeverbrauchseinrichtungen (HCA), die durch eine gemeinsame Wärmeversorgung (CHS) mit einem Heizmedium versorgt werden, wobei das System Folgendes umfasst:
mehrere Wärme-Submetering-Vorrichtungen (HSD), die in den mehreren einzelnen Wärmeverbrauchseinrichtungen (HCA) verteilt sind;
ein Verbrauchszählerablesesystem (MRS), das mit den mehreren Wärme-Submetering-Vorrichtungen (HSD) kommunikativ verbunden ist;
ein Wärmeüberwachungssystem (HMS), das mit dem Verbrauchszählerablesesystem (MRS) kommunikativ verbunden ist und das eine Bündelwarteschlange (BQ) umfasst;
wobei für einen Überwachungszeitraum (MP) ein Teil der mehreren Wärme-Submetering-Vorrichtungen (HSD) zu einer Gruppe von empfangenen Vorrichtungen von den mehreren Wärme-Submetering-Vorrichtungen (HSD) gehört und der verbleibende Teil zu einer Gruppe von nicht-empfangenen Vorrichtungen von den mehreren Wärme-Submetering-Vorrichtungen (HSD) gehört;
wobei das Verbrauchszählerablesesystem (MRS) dafür eingerichtet ist, gemessene Verbrauchszählerablesungen (MMR) zu empfangen, von denen jede einer zugehörigen Wärme-Submetering-Vorrichtung (HSD) aus der Gruppe von empfangenen Vorrichtungen von den mehreren Wärme-Submetering-Vorrichtungen (HSD) entspricht;
wobei das Verbrauchszählerablesesystem (MRS) außerdem dafür eingerichtet ist, Verbrauchszählerablesungen (MR) an das Wärmeüberwachungssystem (HMS) zu übertragen, wobei wenigstens eine der Verbrauchszählerablesungen (MR) eine Repräsentation einer der empfangenen gemessenen Verbrauchszählerablesungen (MMR) umfasst, wobei das Übertragen dafür eingerichtet ist, Folgendes zu umfassen:
Zuordnen der Verbrauchszählerablesungen (MR) zu Übertragungsbündeln (TB) und für jedes dieser Übertragungsbündel (TB):
Übertragen des Übertragungsbündels (TB) an das Wärmeüberwachungssystem (HMS);
Einstellen des übertragenen Übertragungsbündels (TB) in die Bündelwarteschlange (BQ) des Wärmeüberwachungssystems (HMS);
Empfangen, in dem Verbrauchszählerablesesystem (MRS) und von dem Wärmeüberwachungssystem (HMS), einer Bündelquittung (BR) für das übertragene Übertragungsbündel (TB);
wobei das Wärmeüberwachungssystem (HMS) dafür eingerichtet ist, die Übertragungsbündel (TB) aus der Bündelwarteschlange (BQ) zu validieren;
wobei das Wärmeüberwachungssystem (HMS) dafür eingerichtet ist, Wärmeverbrauchswerten (HCV) zu berechnen, die für die Überwachungszeiträume (MP) zu einer oder mehreren der mehreren Wärmeverbrauchseinrichtungen (HCA) gehören, wobei für jeden Überwachungszeitraum (MP) die Berechnung dafür eingerichtet ist, Folgendes zu umfassen:
Bereitstellen eines Energieverbrauchs (EC), der von der gemeinsamen Wärmeversorgung (CHS) stammt und der dem Überwachungszeitraum (MP) zugeordnet ist;
Auswählen von Verbrauchszählerablesungen (MR), die jeder der mehreren Wärme-Submetering-Vorrichtungen (HSD) zugeordnet sind und die dem Überwachungszeitraum (MP) zugeordnet sind;
wobei die ausgewählten Verbrauchszählerablesungen (MR) geschätzte Verbrauchszählerablesungen (EMR) umfassen, die Wärme-Submetering-Vorrichtungen (HSD) aus der Gruppe von nicht empfangenen Vorrichtungen von den mehreren Wärme-Submetering-Vorrichtungen (HSD) entsprechen, und wobei die wenigstens eine von den Verbrauchszählerablesungen (MR) die Repräsentation von einer der gemessenen Verbrauchszählerablesungen (MMR) umfasst.

14. System zum Überwachen des Wärmeverbrauchs nach Anspruch 13, wobei das System zum Überwachen des Wärmeverbrauchs außerdem dafür eingerichtet ist, das Verfahren auszuführen nach einem der Ansprüche 1 bis 12, oder das System zum Überwachen des Wärmeverbrauchs eines der Systemmerkmale nach einem der Ansprüche 1 bis 12 umfasst.

## Revendications

1. Procédé de surveillance d'une consommation de chaleur utilisant une pluralité de dispositifs de comptage divisionnaire de chaleur (HSD) distribués dans une pluralité d'agencements de consommation de chaleur (HCA) individuels alimentés avec un milieu chauffant par une alimentation de chaleur commune (CHS), ladite pluralité de dispositifs de comptage divisionnaire de chaleur (HSD) étant associés de manière communicante à un système de relevé de compteurs (MRS), le procédé comprenant :
la réception dans ledit système de relevé de compteurs (MRS) de relevés de compteurs mesurés (MMR), chacun correspondant à un dispositif de comptage divisionnaire de chaleur (HSD) respectif d'un groupe de dispositifs reçus de ladite pluralité de dispositifs de comptage divisionnaire de chaleur (HSD) ;
la transmission de relevés de compteurs (MR) à un système de surveillance de chaleur (HMS), au moins un parmi lesdits relevés de compteurs (MR) comprenant une représentation de l'un desdits relevés de compteurs mesurés (MMR) reçus, ladite transmission comprenant :
l'attribution desdits relevés de compteurs (MR) à des lots de transmission (TB) et pour chacun desdits lots de transmission (TB) :
la transmission dudit lot de transmission (TB) audit système de surveillance de chaleur (HMS) ;
le placement dudit lot de transmission (TB) transmis dans une file d'attente de lots (BQ) dudit système de surveillance de chaleur (HMS) ;
la réception dans ledit système de relevé de compteurs (MRS) à partir dudit système de surveillance de chaleur (HMS) d'un reçu de lot (BR) pour ledit lot de transmission (TB) transmis ;
la validation dans ledit système de surveillance de chaleur (HMS) desdits lots de transmission (TB) de ladite file d'attente de lots (BQ) ;
le calcul dans ledit système de surveillance de chaleur (HMS) de valeurs de consommation de chaleur (HCV) correspondant à un ou plusieurs de ladite pluralité d'agencements de consommation de chaleur (HCA) pour des périodes de surveillance (MP), pour chaque période de surveillance (MP) le calcul comprenant :
la fourniture d'une consommation d'énergie (EC) provenant de ladite alimentation de chaleur commune (CHS) et qui est associée à ladite période de surveillance (MP) ;
la sélection de relevés de compteurs (MR) correspondant à chacun de ladite pluralité de dispositifs de comptage divisionnaire de chaleur (HSD), et qui sont associés à ladite période de surveillance (MP) ;
dans lequel lesdits relevés de compteurs (MR) sélectionnés comprennent des relevés de compteurs estimés (EMR) correspondant à des dispositifs de comptage divisionnaire de chaleur (HSD) d'un groupe de dispositifs non reçus de ladite pluralité de dispositifs de comptage divisionnaire de chaleur (HSD) et ledit au moins un parmi lesdits relevés de compteurs (MR) comprenant ladite représentation de l'un desdits relevés de compteurs mesurés (MMR).

2. Procédé selon la revendication 1 dans lequel ladite transmission de relevés de compteurs (MR) comprend le système de relevé de compteurs (MRS) transmettant lesdits lots de transmission (TB) à un service exposé par ledit système de surveillance de chaleur (HMS).

3. Procédé selon l'une quelconque des revendications précédentes dans lequel au moins un parmi lesdits relevés de compteurs (MR) attribués comprend un relevé de compteur estimé (EMR) correspondant à un dispositif de comptage divisionnaire de chaleur (HSD) d'un groupe de dispositifs non reçus de ladite pluralité de dispositifs de comptage divisionnaire de chaleur (HSD).

4. Procédé selon l'une quelconque des revendications précédentes dans lequel au moins un parmi lesdits relevés de compteurs (MR) attribués comprend un relevé de compteur mis à jour (UMR) correspondant à l'un de ladite pluralité de dispositifs de comptage divisionnaire de chaleur (HSD).

5. Procédé selon l'une quelconque des revendications précédentes dans lequel ledit reçu de lot (BR) comprend un identifiant unique et/ou un code d'état, tel que dans lequel la seule information dans ledit reçu de lot (BR) est ledit identifiant unique.

6. Procédé selon l'une quelconque des revendications précédentes dans lequel ledit système de relevé de compteurs (MRS) après la transmission dudit lot de transmission (TB) attend le reçu dudit reçu de lot (BR) avant de poursuivre la transmission d'un autre lot de transmission.

7. Procédé selon l'une quelconque des revendications précédentes dans lequel ladite validation desdits lots de transmission (TB) comprend après la validation d'un lot de transmission (TB) la génération et la transmission d'une réponse de validation (VR) à partir dudit système de surveillance de chaleur (HMS) audit système de relevé de compteurs (MRS), par exemple dans lequel ledit système de surveillance de chaleur (HMS) transmet ladite réponse de validation (VR) audit système de relevé de compteurs (MRS) lors d'une demande de validation à partir dudit système de relevé de compteurs (MRS) dans lequel ladite demande de validation à partir dudit système de relevé de compteurs comprend une référence au reçu de lot (BR) respectif dudit lot de transmission (TB) qui a été validé, tel qu'un identifiant unique compris par ledit reçu de lot (BR).

8. Procédé selon l'une quelconque des revendications précédentes dans lequel chaque relevé de compteur (MR) comprend un temps de relevé (RT), et ladite association de relevés de compteurs (MR) à ladite période de surveillance (MP) est basée sur ledit temps de relevé (RT).

9. Procédé selon l'une quelconque des revendications précédentes dans lequel ladite sélection de relevés de compteurs (MR) comprend la fourniture d'un relevé de compteur estimé (EMR) pour l'un quelconque de ladite pluralité de dispositifs de comptage divisionnaire de chaleur (HSD) pour lequel aucun relevé de compteur (MR) associé à ladite période de surveillance (MP) n'est trouvé dans ladite mémoire dudit système de surveillance de chaleur (HMS).

10. Procédé selon l'une quelconque des revendications précédentes dans lequel lesdits lots de transmission (TB) comprennent une étiquette de priorité (PL) associée à un niveau de priorité, et dans lequel ledit placement desdits lots de transmission (TB) dans ladite file d'attente de lots (BQ) est réalisé sur la base dudit niveau de priorité.

11. Procédé selon l'une quelconque des revendications précédentes dans lequel ledit calcul de valeurs de consommation de chaleur (HVC) pour une période de surveillance (MP) est répété comme un nouveau calcul pour la même période de surveillance (MP), le nouveau calcul qui est déclenché par des relevés de compteurs (MR) associés à ladite même période de surveillance (MP) étant reçu via lesdits lots de transmission (TB) dans le système de surveillance de chaleur (HMS).

12. Procédé selon l'une quelconque des revendications précédentes dans lequel le temps de ladite réception de relevés de compteurs mesurés associés à une période de surveillance (MP) est un premier temps d'acquisition (AT1) de ladite période de surveillance (MP1) et le temps de ladite transmission d'un lot de transmission (TB) comprenant des relevés de compteurs (MR) associés à ladite période de surveillance (MP) est un premier temps de transmission (TT1) de ladite période de surveillance (MP) ;
dans lequel le procédé comprend une étape de fourniture dans ledit système de relevé de compteurs (MRS) à un second temps d'acquisition (AT2) de ladite période de surveillance (MP) après ladite première transmission (TT1) d'un ou plusieurs relevés de compteurs (MR) associés à ladite période de surveillance (MP) et correspondant à un ou plusieurs dispositifs de comptage divisionnaire de chaleur (HSD) dudit groupe de dispositifs non reçus ;
dans lequel le procédé comprend une étape de transmission d'un ou plusieurs relevés de compteurs mis à jour (UMR) audit système de surveillance de chaleur (HMS) à un second temps de transmission (TT2) de ladite période de surveillance (MP) plus tard que ledit premier temps de transmission (TT1), dans lequel chaque relevé de compteur mis à jour (UMR) comprend un desdits un ou plusieurs relevés de compteurs (MR) fournis dans ledit système de relevé de compteurs (MRS) audit second temps d'acquisition (AT2) de ladite période de surveillance (MP) ; et
dans lequel le procédé comprend la répétition dudit calcul comme un nouveau calcul dans ledit système de surveillance de chaleur (HMS) de valeurs de consommation de chaleur (HCV) correspondant à un ou plusieurs de ladite pluralité d'agencements de consommation de chaleur (HCA) pour une période de surveillance (MP) pour laquelle ledit calcul a déjà été réalisé, le nouveau calcul comprenant :
la fourniture de ladite consommation d'énergie (EC) provenant de ladite alimentation de chaleur commune (CHS) et qui est associée à ladite période de surveillance (MP) ;
la sélection de relevés de compteurs (MR) correspondant à chacun de ladite pluralité de dispositifs de comptage divisionnaire de chaleur (HSD), et qui sont associés à ladite période de surveillance (MP) ;
dans lequel lesdits relevés de compteurs (MR) sélectionnés comprennent des relevés de compteurs transmis audit premier temps de transmission (TT1) de ladite période de surveillance (MP) et lesdits relevés de compteurs mis à jour (UMR) transmis audit second temps de transmission (TT2) de ladite période de surveillance (MP).

13. Système permettant de surveiller une consommation de chaleur dans une pluralité d'agencements de consommation de chaleur (HCA) individuels alimentés avec un milieu chauffant par une alimentation de chaleur commune (CHS), le système comprenant :
une pluralité de dispositifs de comptage divisionnaire de chaleur (HSD) distribués dans ladite pluralité d'agencements de consommation de chaleur (HCA) individuels ;
un système de relevé de compteurs (MRS) couplé de manière communicante à ladite pluralité de dispositifs de comptage divisionnaire de chaleur (HSD) ;
un système de surveillance de chaleur (HMS) couplé de manière communicante audit système de relevé de compteurs (MRS) et comprenant une file d'attente de lots (BQ) ;
dans lequel une partie de ladite pluralité de dispositifs de comptage divisionnaire de chaleur (HSD) appartient à un groupe de dispositifs reçus de ladite pluralité de dispositifs de comptage divisionnaire de chaleur (HSD) et la partie restante appartient à un groupe de dispositifs non reçus de ladite pluralité de dispositifs de comptage divisionnaire de chaleur (HSD) pour une période de surveillance (MP) ;
dans lequel ledit système de relevé de compteurs (MRS) est agencé pour recevoir des relevés de compteurs mesurés (MMR) correspondant chacun à un dispositif de comptage divisionnaire de chaleur (HSD) respectif dudit groupe de dispositifs reçus de ladite pluralité de dispositifs de comptage divisionnaire de chaleur (HSD) ;
dans lequel ledit système de relevé de compteurs (MRS) est en outre agencé pour transmettre des relevés de compteurs (MR) audit système de surveillance de chaleur (HMS), au moins un parmi lesdits relevés de compteurs (MR) comprenant une représentation de l'un desdits relevés de compteurs mesurés (MMR) reçus, ladite transmission étant agencée pour comprendre :
l'attribution desdits relevés de compteurs (MR) à des lots de transmission (TB) et pour chacun desdits lots de transmission (TB) :
la transmission dudit lot de transmission (TB) audit système de surveillance de chaleur (HMS) ;
le placement dudit lot de transmission (TB) transmis dans ladite file d'attente de lots (BQ) dudit système de surveillance de chaleur (HMS) ;
la réception dans ledit système de relevé de compteurs (MRS) à partir dudit système de surveillance de chaleur (HMS) d'un reçu de lot (BR) pour ledit lot de transmission (TB) transmis ;
dans lequel ledit système de surveillance de chaleur (HMS) est agencé pour valider lesdits lots de transmission (TB) de ladite file d'attente de lots (BQ) ;
dans lequel ledit système de surveillance de chaleur (HMS) est agencé pour calculer des valeurs de consommation de chaleur (HCV) correspondant à un ou plusieurs de ladite pluralité d'agencements de consommation de chaleur (HCA) pour lesdites périodes de surveillance (MP), pour chaque période de surveillance (MP) ledit calcul étant agencé pour comprendre :
la fourniture d'une consommation d'énergie (EC) provenant de ladite alimentation de chaleur commune (CHS) et qui est associée à ladite période de surveillance (MP) ;
la sélection de relevés de compteurs (MR) correspondant à chacun de ladite pluralité de dispositifs de comptage divisionnaire de chaleur (HSD), et qui sont associés à ladite période de surveillance (MP) ;
dans lequel lesdits relevés de compteurs (MR) sélectionnés comprennent des relevés de compteurs estimés (EMR) correspondant à des dispositifs de comptage divisionnaire de chaleur (HSD) dudit groupe de dispositifs non reçus de ladite pluralité de dispositifs de comptage divisionnaire de chaleur (HSD) et ledit au moins un parmi lesdits relevés de compteurs (MR) comprenant ladite représentation de l'un desdits relevés de compteurs mesurés (MMR).

14. Système permettant de surveiller une consommation de chaleur selon la revendication 13 dans lequel ledit système permettant de surveiller une consommation de chaleur est en outre agencé pour exécuter la procédé selon l'une quelconque de revendications 1 à 12 ou ledit système permettant de surveiller une consommation de chaleur inclut l'une quelconque des caractéristiques du système selon l'une quelconque des revendications 1 à 12.
